(19) Europäisches Patentamt
European Patent Office
Office européen des brevets

(11) **EP 4 482 148 A1**

(12) **EUROPEAN PATENT APPLICATION**

(43) Date of publication:
**25.12.2024 Bulletin 2024/52**

(21) Application number: **24157714.7**

(22) Date of filing: **15.02.2024**

(51) International Patent Classification (IPC):
**H04N 19/54** (2014.01)   **H04N 19/597** (2014.01)
**H04N 19/70** (2014.01)

(52) Cooperative Patent Classification (CPC):
**H04N 19/70; H04N 19/54; H04N 19/597**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.06.2023   JP 2023102925**
           **07.09.2023   JP 2023145243**

(71) Applicant: **SHARP Kabushiki Kaisha**
**Sakai-City, Osaka 590-8522 (JP)**

(72) Inventors:
• **TOKUMO, Yasuaki**
  **Sakai City, Osaka 590-8522 (JP)**
• **TAKADA, Keiichiro**
  **Sakai City, Osaka 590-8522 (JP)**
• **IKAI, Tomohiro**
  **Sakai City, Osaka 590-8522 (JP)**
• **CHUJOH, Takeshi**
  **Sakai City, Osaka 590-8522 (JP)**
• **AONO, Tomoko**
  **Sakai City, Osaka 590-8522 (JP)**

(74) Representative: **Müller Hoffmann & Partner**
**Patentanwälte mbB**
**St.-Martin-Straße 58**
**81541 München (DE)**

(54) **3D DATA DECODING APPARATUS AND 3D DATA ENCODING APPARATUS**

(57)   Object
    It is an object of the present invention to encode and decode a mesh displacement image as an image in a 4:2:0 format in encoding and decoding 3D data using a video coding scheme, reduce distortion caused by encoding, and encode and decode 3D data with high quality.
    Solution
    A 3D data decoding apparatus includes a video decoder configured to decode a mesh displacement image decoded from a geometry video stream in which a Unit Type of the coded data is V3C_GVD and a displacement unmapper configured to derive a mesh displacement per position pos and component compIdx from a mesh displacement image, wherein the displacement unmapper is configured to derive a Y coordinate of a geometry image from the product of a height and a variable from 0 to a value indicating the number of dimensions of geometry minus 1 to derive the mesh displacement in a case that the geometry image is in a 4:2:0 format.

FIG. 5

**Description**

Technical Field

Embodiments of the present invention relate to a 3D data encoding apparatus and a 3D data decoding apparatus.

Background Art

A 3D data encoding apparatus that converts 3D data into a two-dimensional image and encodes it using a video coding scheme to generate coded data and a 3D data decoding apparatus that decodes a two-dimensional image from the coded data to reconstruct 3D data are provided to efficiently transmit or record 3D data.

Specific 3D data coding schemes include, for example, MPEG-I ISO/IEC 23090-5 Visual Volumetric Video-based Coding (V3C) and Video-based Point Cloud Compression (V-PCC). V3C can encode and decode a point cloud including point positions and attribute information. V3C is also used to encode and decode multi-view videos and mesh videos through ISO/IEC 23090-12 (MPEG Immersive Video (MIV)) and ISO/IEC 23090-29 (Video-based Dynamic Mesh Coding (V-DMC)) that is currently being standardized. A latest draft document of the V-DMC scheme is disclosed in NPL 1.

In such 3D data coding schemes, geometries and attributes that constitute 3D data are encoded and decoded as images using a video coding scheme such as H.265/HEVC (High Efficiency Video Coding) or H.266/VVC (Versatile Video Coding).

In the case of a point cloud, a geometry image is an image corresponding to depths to the projection plane and an attribute image is an image of attributes projected onto the projection plane.

3D data (mesh data) as in NPL 1 contains a base mesh, mesh displacements, a mesh displacement array, and a texture mapping image. A vertex coding scheme such as Draco can be used for the base mesh, the geometry image is a mesh displacement image in which mesh displacements are represented in two dimensions, and the attribute image is a texture mapping image. These are encoded and decoded using a video coding scheme such as HEVC or VVC as described above.

Citation List

Non Patent Literature

NPL 1:
WD 3.0 of V-DMC (MDS22775_WG07_N00611_d9), ISO/IEC JTC 1/SC 29/WG 7 N0611, April 2023

Summary of Invention

Technical Problem

The method of encoding and decoding a mesh displacement image as a 4:2:0 format image in NPL 1 has a problem that an error tolerance function and a scalability function depending on the capabilities of the decoding apparatus are insufficient.

It is an object of the present invention to encode and decode a mesh displacement image as an image in a YCbCr4:2:0 format in encoding and decoding 3D data using a video coding scheme, reduce distortion caused by encoding, and encode and decode 3D data with high quality.

Solution to Problem

A 3D data decoding apparatus according to an aspect of the present invention to solve the above problem is a 3D data decoding apparatus for decoding coded data, the 3D data decoding apparatus including a video decoder configured to decode a mesh displacement image decoded from a geometry video stream in which a Unit Type of the coded data is V3C_GVD and a displacement unmapper configured to derive a mesh displacement QDisp[compIdx][pos] per position pos and component compIdx from a mesh displacement image gFrame[compIdx][y][x] having an x and y position and a component compIdx, wherein the displacement unmapper is configured to derive a Y coordinate of a geometry image from a product of a height dispCompHeight and a variable compIdx from 0 to a value indicating the number of dimensions DisplacementDim of geometry minus 1 to derive the mesh displacement in a case that the geometry image is in a 4:2:0 format.

Advantageous Effects of Invention

According to an aspect of the present invention, it is possible to reduce distortion caused by encoding a mesh displacement image and encode and decode 3D data with high quality.

Brief Description of Drawings

FIG. 1 is a schematic diagram illustrating a configuration of a 3D data transmission system according to the present embodiment.
FIG. 2 is a diagram illustrating a hierarchical structure of data of a coded stream.
FIG. 3 is a functional block diagram illustrating a schematic configuration of a 3D data decoding apparatus 31.
FIG. 4 is a functional block diagram illustrating a configuration of a base mesh decoder 303.
FIG. 5 is a functional block diagram illustrating a configuration of a mesh displacement decoder 305.
FIG. 6 is a functional block diagram illustrating a configuration of a mesh reconstructor 307.
FIG. 7 shows an example of a syntax having a configuration in which coordinate conversion parameters and displacement mapping parameters are transmitted in a sequence level (ASPS).
FIG. 8 shows an example of a syntax having a configuration in which coordinate conversion parameters and displacement mapping parameters are transmitted in a picture/frame level (AFPS).
FIG. 9 illustrates an example in which a mesh displacement image gFrame is divided into the number of segments (slices) corresponding to the number of dimensions of a geometry.
FIG. 10 illustrates an example in which a mesh displacement image gFrame is divided into the number of segments (slices) corresponding to the number of dimensions of a geometry and LODs.
FIG. 11 is a diagram for explaining an operation of the mesh reconstructor 307.
FIG. 12 is a functional block diagram illustrating a schematic configuration of a 3D data encoding apparatus 11.
FIG. 13 is a functional block diagram illustrating a configuration of a base mesh encoder 103.
FIG. 14 is a functional block diagram illustrating a configuration of a mesh displacement encoder 107.
FIG. 15 is a functional block diagram illustrating a configuration of a mesh separator 115.
FIG. 16 is a diagram for explaining an operation of the mesh separator 115.
FIG. 17 shows an example of a syntax having a configuration in which a displacement slice division parameter for each level of details is transmitted in a sequence level (ASPS).
FIG. 18 shows an example of a syntax having a configuration in which a displacement slice division parameter for each level of details is transmitted in a picture/frame level (AFPS).
FIG. 19 shows an example of a syntax of displacement slice division parameters.
FIG. 20 shows an example of a syntax of displacement slice division parameters.
FIG. 21 shows an example of a syntax of displacement slice division parameters.
FIG. 22 shows an example of a syntax of displacement slice division parameters.
FIG. 23 shows an example of a syntax of displacement slice division parameters.

Description of Embodiments

Embodiments of the present invention will be described below with reference to the drawings.

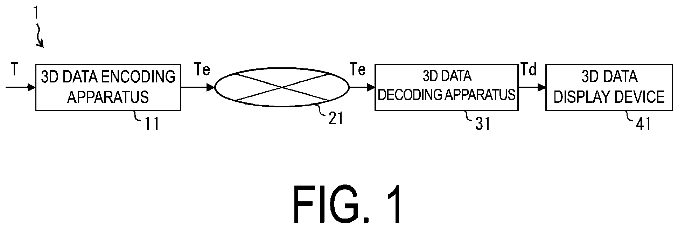

FIG. 1 is a schematic diagram illustrating a configuration of a 3D data transmission system 1 according to the present embodiment.
The 3D data transmission system 1 is a system that transmits a coded stream obtained by encoding 3D data to be encoded, decodes the transmitted coded stream, and displays 3D data. The 3D data transmission system 1 contains a 3D data encoding apparatus 11, a network 21, a 3D data decoding apparatus 31, and a 3D data display device 41.
3D data T is input to the 3D data encoding apparatus 11.
The network 21 transmits a coded stream Te generated by the 3D data encoding apparatus 11 to the 3D data decoding apparatus 31. The network 21 is the Internet, a Wide Area Network (WAN), a Local Area Network (LAN), or a combination thereof. The network 21 is not necessarily a bidirectional communication network and may be a unidirectional communication network that transmits broadcast waves for terrestrial digital broadcasting, satellite broadcasting, or the like. The network 21 may be replaced by a storage medium on which the coded stream Te is recorded, such as a Digital Versatile Disc (DVD) (trade name) or a Blu-ray Disc (BD) (trade name).
The 3D data decoding apparatus 31 decodes each coded stream Te transmitted by the network 21 and generates one or more pieces of decoded 3D data Td.
The 3D data display device 41 displays all or some of one or more pieces of decoded 3D data Td generated by the

**EP 4 482 148 A1**

3D data decoding apparatus 31. The 3D data display device 41 contains a display device such as, for example, a liquid crystal display or an organic Electro-luminescence (EL) display. Examples of display types contain stationary, mobile, and HMD. The 3D data display device 41 displays a high quality image in a case that the 3D data decoding apparatus 31 has high processing capacity and displays an image that does not require high processing or display capacity in a case that it has only lower processing capacity.

Operators

Operators used herein will be described below.

">>" is a right bit shift, "<<" is a left bit shift, "&" is a bitwise AND, "I" is a bitwise OR, "|=" is an OR assignment operator, and "‖" indicates a logical sum.

"x? y:z" is a ternary operator that takes y if x is true (not 0) and z if x is false (0).

"y .. z" indicates a set of integers from y to z.

Structure of Coded Stream Te

Prior to a detailed description of a 3D data encoding apparatus 11 and a 3D data decoding apparatus 31 according to the present embodiment, a data structure of the coded stream Te generated by the 3D data encoding apparatus 11 and decoded by the 3D data decoding apparatus 31 will be described.

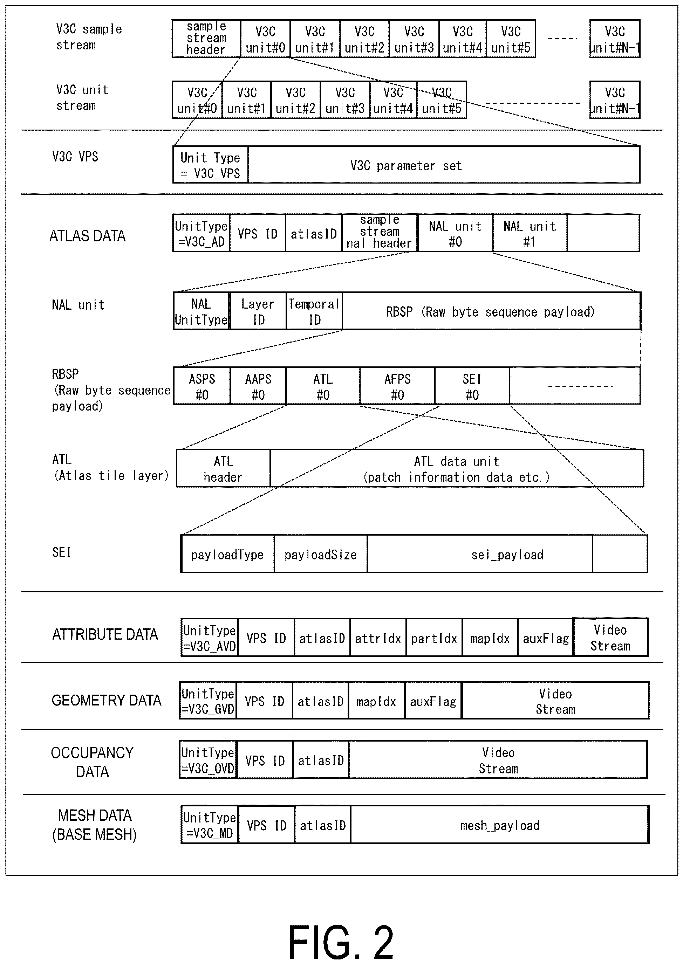

FIG. 2 is a diagram illustrating a hierarchical structure of data of the coded stream Te. The coded stream Te has a data structure of either a V3C sample stream or a V3C unit stream. A V3C sample stream contains a sample stream header and V3C units. A V3C unit stream contains V3C units.

Each V3C unit contains a V3C unit header and a V3C unit payload. A header of a V3C unit (= V3C unit header) is a Unit Type which is an ID indicating the type of the V3C unit and has a value indicated by a label such as V3C_VPS, V3C_AD, V3C_AVD, V3C_GVD, or V3C_OVD.

In a case that the Unit Type is a V3C_VPS (Video Parameter Set), the V3C unit contains a V3C parameter set.

In a case that the Unit Type is V3C_AD (Atlas Data), the V3C unit contains a VPS ID, an atlasID, a sample stream nal header, and a plurality of NAL units. An Identification (ID) has an integer value of 0 or more.

Each NAL unit contains a NALUnitType, a layerID, a TemporalID, and a Raw byte sequencepayload (RBSP).

A NAL unit is identified by NALUnitType and contains an Atlas Sequence Parameter Set (ASPS), an Atlas Adaptation Parameter Set (AAPS), an Atlas Tile layer (ATL), Supplemental Enhancement Information (SEI), and the like.

The ATL contains an ATL header and an ATL data unit and the ATL data unit contains information on positions and sizes of patches or the like such as patch information data.

The SEI contains a payloadType indicating the type of the SEI, a payloadSize indicating the size (number of bytes) of the SEI, and a sei_payload which is data of the SEI.

In a case that the Unit Type is V3C_AVD (Attribute Video Data, attribute data), the V3C unit contains a VPS ID, an atlasID, an attrIdx which is an attribute image ID, a partIdx which is a partition ID, a mapIdx which is a map ID, a flag auxFlag indicating whether the data is Auxiliary data, and a video stream. The video stream indicates coded data such as HEVC and VVC. In V-DMC, this corresponds to a texture image.

In a case that the Unit Type is V3C_GVD (Geometry Video Data, geometry data), the V3C unit contains a VPS ID, an atlasID, a mapIdx, an auxFlag, and a video stream. In V-DMC, this corresponds to a mesh displacement.

In a case that the Unit Type is V3C_OVD (Occupancy Video Data, occupancy data), the V3C unit contains a VPS ID, an atlas ID, and a video stream.

In a case that the Unit Type is V3C_MD (Mesh Data), the V3C unit contains a VPS ID, an atlasID, and a mesh_payload. In V-DMC, this corresponds to a base mesh.

Configuration of 3D Data Decoding Apparatus According to First Embodiment

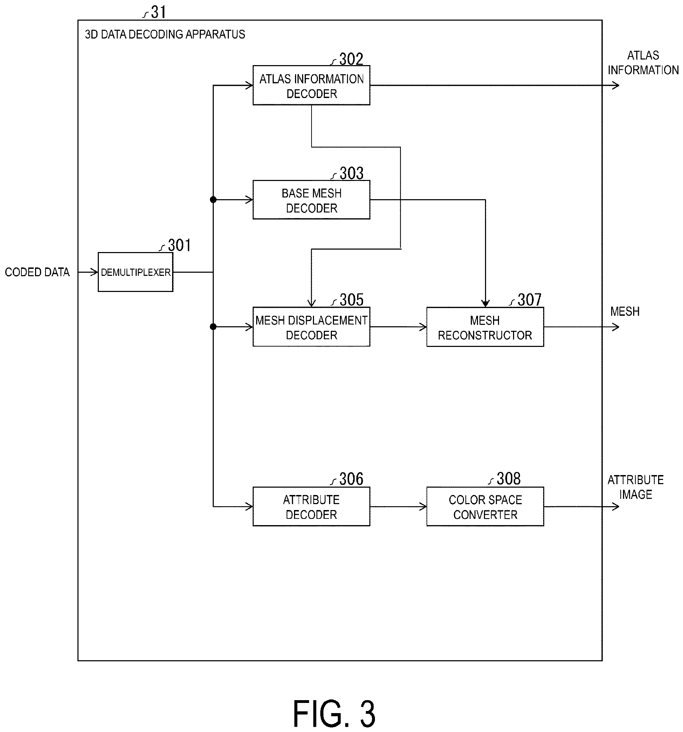

FIG. 3 is a functional block diagram illustrating a schematic configuration of the 3D data decoding apparatus 31 according to a first embodiment. The 3D data decoding apparatus 31 contains a demultiplexer 301, an atlas information decoder 302, a base mesh decoder 303, a mesh displacement decoder 305, a mesh reconstructor 307, an attribute decoder 306, and a color space converter 308. The 3D data decoding apparatus 31 receives coded data of 3D data and outputs atlas information, mesh, and an attribute image.

The demultiplexer 301 receives coded data multiplexed in a byte stream format, an ISOBMFF (ISO Base Media File Format), or the like and demultiplexes it and outputs a coded atlas information stream (an Atlas Data stream of V3C_AD and NALunits), a coded base mesh stream (a mesh_payload of V3C_MD), a coded mesh displacement stream (a video stream of V3C_GVD), and an attribute video stream (a video stream of V3C_AVD).

The atlas information decoder 302 receives the coded atlas information stream output from the demultiplexer 301 and decodes atlas information.

The base mesh decoder 303 decodes a coded base mesh stream that has been encoded by vertex encoding (a 3D data compression coding scheme such as, for example, Draco) and outputs a base mesh. The base mesh will be described later.

The mesh displacement decoder 305 decodes a geometry video stream (a coded mesh displacement stream) that has been encoded using VVC, HEVC, or the like and outputs mesh displacements. The type of codec used for encoding is indicated by a ptl_profile_codec_group_idc obtained by decoding the V3C parameter set of coded data. This may also be indicated by a FourCC code (a four character code or a 4CC code) indicated by a gi_geometry_codec_id [atlasID] in the V3C parameter set. The gi_geometry_codec_id[atlasID] indicates an index corresponding to the codec ID of a decoder used to decode the geometry video stream in the atlas ID. A set indicating the correspondence between the codec ID (ccm_codec_id) and its 4CC code (ccm_codec_4cc[ccm_codec_id]) may be transmitted in another codec mapping SEI (component_codec_mapping SEI). The codec may decode mesh displacements in units of segments (slices) into which each frame is further divided. HEVC and VVC can divide each frame into slices. Each slice is encoded in units of Coded Tree Units (CTUs). Subpictures or tiles may be used as segments instead of slices. Because these subpictures, tiles, or slices can be decoded independently, only a part of a frame can be decoded rather than decoding the entire frame. In a case that subpictures or tiles are used, a configuration in which slices are replaced with subpictures or tiles is adopted.

The mesh reconstructor 307 receives the base mesh and mesh displacements and reconstructs a mesh in 3D space.

The attribute decoder 306 decodes the attribute video stream that has been encoded using VVC, HEVC, or the like and outputs an attribute image in a YCbCr format. The attribute image may be a texture image expanded along the UV axes (a texture mapping image transformed using a UV atlas scheme). The type of codec used for encoding is indicated by a ptl_profile_codec_group_idc obtained by decoding the V3C parameter set of coded data. This may also be indicated by a FourCC code indicated by an ai_geometry_codec_id[atlasID] in the V3C parameter set. The ai_geometry_codec_id [atlasID] indicates an index corresponding to the codec ID of a decoder used to decode the attribute video stream in the atlas ID.

The color space converter 308 performs color space conversion of the attribute image from a YCbCr format to an RGB format. It is also possible to adopt a configuration in which an attribute video stream encoded in an RGB format is decoded and color space conversion is omitted.

Decoding of Base Mesh

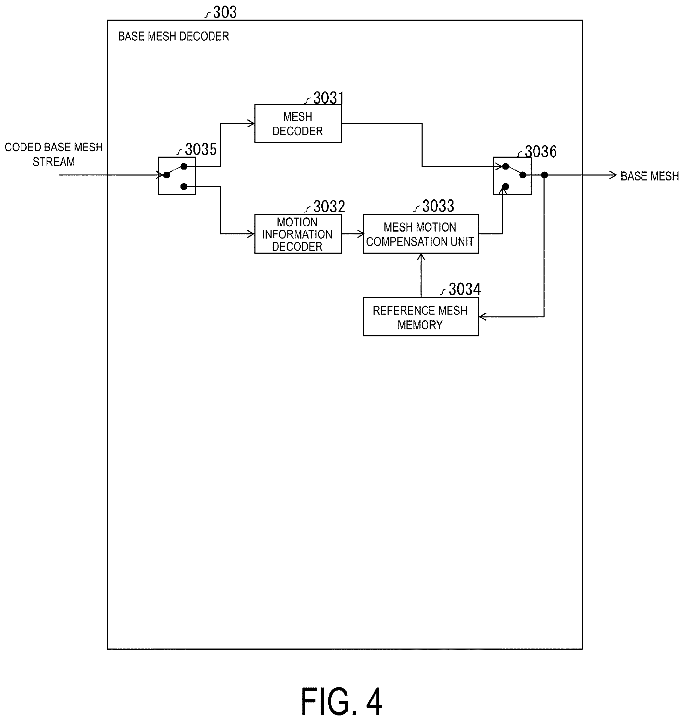

FIG. 4 is a functional block diagram illustrating a configuration of the base mesh decoder 303. The base mesh decoder 303 contains a mesh decoder 3031, a motion information decoder 3032, a mesh motion compensation unit 3033, a reference mesh memory 3034, a switch 3035, and a switch 3036. The base mesh decoder 303 may contain a base mesh inverse quantizer (not illustrated) before the output of a base mesh. Each of the switches 3035 and 3036 is connected to the side where no motion compensation is performed in a case that the base mesh to be decoded has been encoded (intra-coded) without reference to other base meshes (for example, base meshes that have already been encoded and decoded). On the other hand, each of the switches 3035 and 3036 is connected to the side where motion compensation is performed in a case that the base mesh to be decoded has been encoded (inter-coded) with reference to another base mesh. In a case that motion compensation is performed, target vertex coordinates are derived with reference to already decoded vertex coordinates and motion information.

The mesh decoder 3031 decodes a coded base mesh stream that has been intra-coded and outputs a base mesh. Draco, edge breaker, or the like is used as a coding scheme.

The motion information decoder 3032 decodes a coded base mesh stream that has been inter-coded and outputs motion information for each vertex of a reference mesh which will be described later. Entropy coding such as arithmetic coding is used as a coding scheme.

The mesh motion compensation unit 3033 performs motion compensation on each vertex of the reference mesh received from the reference mesh memory 3034 based on the motion information and outputs a motion-compensated mesh.

The reference mesh memory 3034 is a memory that holds decoded meshes for reference in subsequent decoding processing.

Decoding of Mesh Displacements

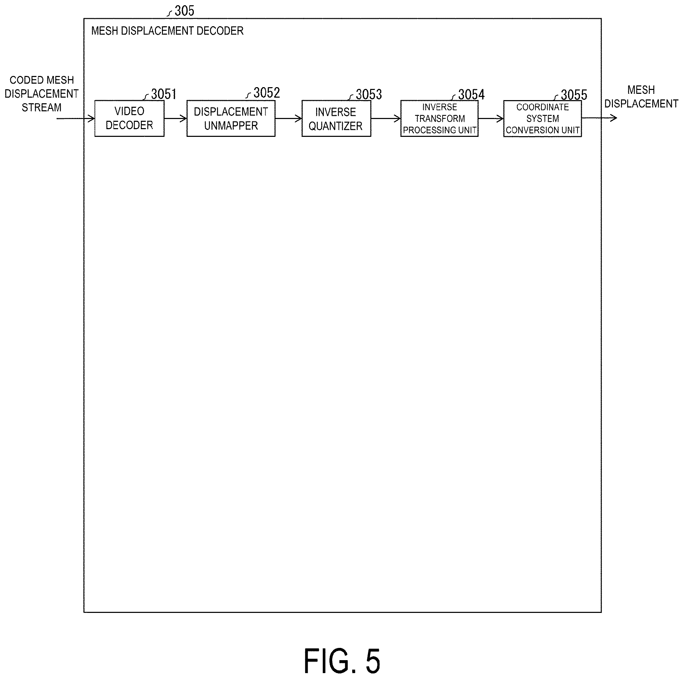

FIG. 5 is a functional block diagram illustrating a configuration of the mesh displacement decoder 305. The mesh displacement decoder 305 contains a displacement unmapper 3052 (an image unpacker or a displacement decoder), an inverse quantizer 3053, an inverse transform processing unit 3054, and a coordinate system conversion unit 3055. The displacement unmapper may also be referred to as a "displacement mapper". The mesh displacement decoder 305 may further contain a video decoder 3051 as illustrated in FIG. 5 or may not contain the video decoder 3051 and may be configured to use the 3D data decoding apparatus 31 for decoding displacement images (displacement arrays). The mesh displacement decoder 305 may also not contain the inverse quantizer 3053 and may be configured such that only the 3D data decoding apparatus 31 performs image quality control.

The atlas information decoder 302 decodes coordinate system conversion information displacementCoordinateSystem (asps_vdmc_ext_displacement_coordinate_system or afps_vdmc_ext_displacement_coordinate_system) indicating a coordinate system from the coded data. The atlas information decoder 302 may also decode slice division information (a displacement slice division parameter, a displacement segment parameter, a displacement slice division flag, and a displacement segment flag) of mesh displacements. The slice division information may be a displacementSliceFlag indicating whether to divide into segments or may be a slice division type displacementSliceType (asps_vdmc_ext_displacement_slice_type or afps_vdmc_ext_displacement_slice_type) indicating how to divide into segments. The slice division information may further include a component height dispCompHeight. The slice division information may also include a syntax element dispPos[lodIdx] indicating the start position of mesh displacements for each LOD or the number of mesh displacements for each LOD dispCount[lodIdx]. The slice division information may also include an index dispCountIdx[lodIdx] indicating the number of mesh displacements. The slice division information may also include a block size ctuSize for alignment of slices or an index ctuSizeIdx indicating the ctuSize. The slice division type is a parameter indicating the type of slice division. The component height is a parameter indicating the height of an image corresponding to each of the components (for example, n, t, and b) of three-dimensional mesh displacement vectors. The normal (n), tangent (t), and bitangent (b) components will also be referred to as components.

The slice division information may be a syntax element displacementSliceFlag (displacementSliceEnabledFlag or displacementSliceUsedFlag) indicating that displacements are divided into slices in units of components. Here, displacements being divided into slices in units of components means that at least the first (normal) component out of the normal, tangent, and bitangent components is encoded using a slice different from those of the second (tangent) and third (bitangent) components in a case that displacements are encoded using AVC, HEVC, VVC, or the like. For example, displacementSliceFlag == 1 may be a case that a picture is divided into two slices, slice 0 for normal and slice 1 for tangent and bitangent. displacementSliceFlag == 0 is a case that a picture is not divided into slices or a case that a picture is not explicitly divided into slices. For example, displacementSliceFlag == 1 may be a case that a picture is divided into three slices, slice 0 for normal, slice 1 for tangent, and slice 2 for bitangent. displacementSliceFlag == 1 may also be defined to indicate that displacements are divided into slices at the boundaries of components of the displacements. The asps_vdmc_ext_displacement_slice_type may also be used to further indicate the case that a picture is divided into two slices or the case that a picture is divided into three slices as will be described later. Such use of an explicit syntax element to indicate in advance that a picture is divided into slices allows the 3D data decoding apparatus to decode only specific slices, such that it is possible to realize decoding that is scalable depending on decoding capabilities and power consumption. Although slice division is mentioned here, slices may be replaced with tiles or subpictures in a case of supporting segments (decoding units) other than slices such as HEVC or VVC. The same applies hereinafter.

The slice division information may also be a flag indicating that a plurality of frames that are consecutive in the temporal direction are divided into rectangles of the same size and inter-picture prediction is performed only within corresponding rectangular areas. Tile division using a Motion Constrained Tile Set (MCTS) of HEVC may also be used. Alternatively, division that restricts predictions other than those from subpictures that are consecutive in the temporal direction of VVC may be used. Subpictures that can be referenced are subpictures at co-located positions for which temporal prediction is restricted. Normally, slice division has independency such that a slice in a picture is not subjected to prediction and filtering with respect to slices other than the slice, whereas subpictures are characterized by independency that has no dependency relationship not only in the spatial direction but also in the temporal direction. Information regarding tiles of HEVC or subpictures of VVC is referred to as spatiotemporally independent slice division information.

A gating flag may also be provided separately and each piece of coordinate system conversion information may be decoded only in a case that the gating flag is 1. The gating flag is, for example, an afps_vdmc_ext_overriden_flag. A gating flag may also be provided in slice division information and the slice division information may be decoded only in a case that the gating flag is 1. The gating flag is, for example, an afps_vdmc_ext_displacement_slice_alignment_flag.

Coordinate Systems

The following two types of coordinate systems are used as coordinate systems for mesh displacements (three-dimensional vectors).

Cartesian coordinate system (canonical): An orthogonal coordinate system that is commonly defined throughout 3D space. An (X, Y, Z) coordinate system. An orthogonal coordinate system whose directions do not change at the same time (within the same frame or within the same tile).

Local coordinate system (local): An orthogonal coordinate system defined for each region or each vertex in 3D space. An orthogonal coordinate system whose directions can change at the same time (within the same frame or within the same tile). A normal (D), tangent (U), and bitangent (V) coordinate system. That is, the local coordinate system is an orthogonal coordinate system that has a first axis (D) indicated by a normal vector n_vec at a certain vertex (on a surface including a certain vertex) and a second axis (U) and a third axis (V) indicated by two tangent vectors t_vec and b_vec orthogonal to the normal vector n_vec. n_vec, t_vec, and b_vec are three-dimensional vectors. The (D, U, V) coordinate system may also be referred to as an (n, t, b) coordinate system.

Decoding and Derivation of Sequence-Level Control Parameters

Here, control parameters used in the mesh displacement decoder 305 will be described.

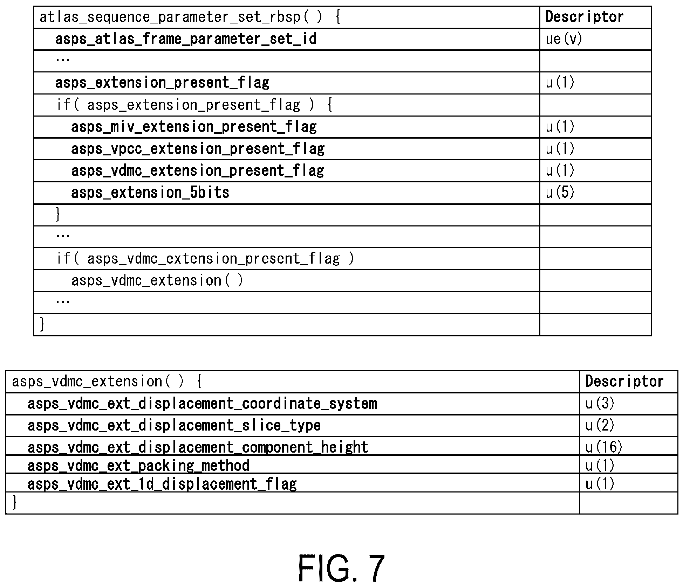

FIG. 7 shows an example of a syntax having a configuration in which a coordinate system conversion parameter and a displacement slice division parameter are transmitted in a sequence-level ASPS.

An Atlas Sequence Parameter Set (ASPS) or Atlas sequence mesh information is one of the NAL units of atlas information and includes a syntax element applied to coded atlas sequences. In the ASPS, a coordinate system conversion parameter and a displacement slice division parameter are transmitted using an asps_vdmc_extension() syntax. The semantics of each field is as follows.

asps _vdmc_ext_displacement_coordinate_system: Coordinate system conversion information indicating the coordinate system for mesh displacements. A value equal to a predetermined first value (for example, 0) indicates a Cartesian coordinate system. A value equal to a second value (for example, 1) different from the first value indicates a local coordinate system.

asps vdmc_ext_displacement_slice_type: Indicates the type of slice division of each component of mesh displacements. The meanings of its values are as follows.

0: Reserved.
1: The first components (for example, normal (n)) of mesh displacements are assigned to the first slice of a geometry video stream, the second components (for example, tangent (t)) are assigned to the second slice of the geometry video stream, and the third components (for example, bitangent (b)) are assigned to the third slice of the geometry video stream.
2: The first components (for example, n) of mesh displacements are assigned to the first slice and the second and third components (for example, t and b) are assigned to the second slice.
3: Reserved.

The following may also be used as described above.

0: Mesh displacements are not divided into slices or that mesh displacements are not specified to be divided into slices.
1: The first components (for example, normal) of mesh displacements are assigned to the first slice of a geometry video stream, the second components (for example, tangent) are assigned to the second slice of the geometry video stream, and the third components (for example, bitangent) are assigned to the third slice of the geometry video stream.

The following may also be used as described above.

0: Mesh displacements are not divided into slices or mesh displacements are not specified to be divided into slices.
1: The first components (for example, normal) of mesh displacements are assigned to the first slice and the second and third components (for example, tangent, bitangent) of mesh displacements are assigned to the second slice.

asps vdmc_ext_displacement_component_height: Indicates the height of an image corresponding to each of the components (for example, Y, U, and V) of mesh displacements.

Decoding and Derivation of Picture/Frame-Level Control Parameters

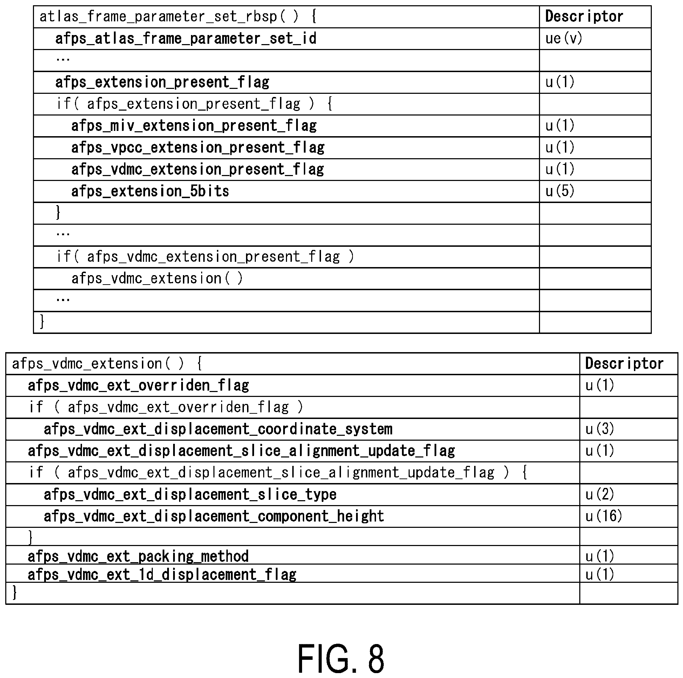

FIG. 8 shows an example of a syntax having a configuration in which a coordinate system conversion parameter and a displacement slice division parameter are transmitted in a picture/frame-level AFPS. An Atlas Frame Parameter Set (AFPS) or Atlas frame mesh information is one of the NAL units of atlas information and includes a syntax element applied to coded atlas frames. In the AFPS, a coordinate system conversion parameter and a displacement slice division parameter are transmitted using an afps_vdmc_extension() syntax. The semantics of each field is as follows.

afps _vdmc_ext_overriden_flag: A flag indicating whether to update a coordinate system for mesh displacements. In a case that this flag is equal to true, the coordinate system for mesh displacements is updated based on the value of afps_vdmc_ext_displacement_coordinate_system described below. In a case that this flag is equal to false, the coordinate system for mesh displacements is not updated.

afps_vdmc_ext_displacement_coordinate_system: Coordinate system conversion information indicating the coordinate system for mesh displacements. A value equal to a first value (for example, 0) indicates a Cartesian coordinate system. A value equal to a second value (for example, 1) indicates a local coordinate system. In a case that this syntax element is not present, the value is inferred to be a value decoded using the ASPS and a coordinate system indicated by the ASPS is set as a default coordinate system.

afps_vdmc_ext_displacement_slice_alignment_update_flag: A flag indicating whether to update slice division information of mesh displacements. In a case that this flag is equal to true (for example, 1), the slice division information of mesh displacements is updated based on the values of asps_vdmc_ext_displacement_slice_type and asps _vdmc_ext_displacement_component height described below. In a case that this flag is equal to false (for example, 0), the slice division information of mesh displacements is not updated.

afps_vdmc_ext_displacement_slice_type: Indicates the type of slice division of each component of mesh displacements. The meaning of the value is as described above with reference to the semantics of asps vdmc_ext_displacement_slice_type. In a case that afps_vdmc_ext_displacement_slice_type is not present, afps_vdmc_ext_displacement_slice_type is set equal to asps_vdmc_ext_displacement_slice_type.

afps_vdmc_ext_displacement_component_height: Indicates the height of an image corresponding to each of the components (for example, n, t, and b components) of three-dimensional mesh displacement vectors. In a case that afps_vdmc_ext_displacement_component_height is not present, afps_vdmc_ext_displacement_component_height is set equal to asps_vdmc_ext_displacement_component_height.

The mesh displacement decoder 305 may derive the coordinate system conversion information displacement-CoordinateSystem as follows.

displacementCoordinateSystem = afps_vdmc_ext_displacement_coordinate_system In a case that the afps_vdmc_ext_displacement_coordinate_system is not present, afps_vdmc_ext_displacement_coordinate_system is set equal to asps_vdmc_ext_displacement_coordinate_system.

Derivation of Displacement Slice Division Parameters

The mesh displacement decoder 305 derives the displacement slice division parameters displacementSlice-Type and dispCompHeight as follows.

displacementSliceType = afps_vdmc_ext_displacement_slice_type dispCompHeight = afps_vdmc_ext_displacement_component_height

That is, in a case that a syntax element of a displacement slice division parameter is present in the AFPS, a value of the syntax element in the AFPS is used, and in a case that it is not present, a value of the syntax element in the ASPS is used.

A slice division flag displacementSliceFlag indicating whether segments are used instead of the displacement-SliceType may be decoded from the Atlas frame mesh information.

Examples of Syntax of Displacement Slice Division Parameters

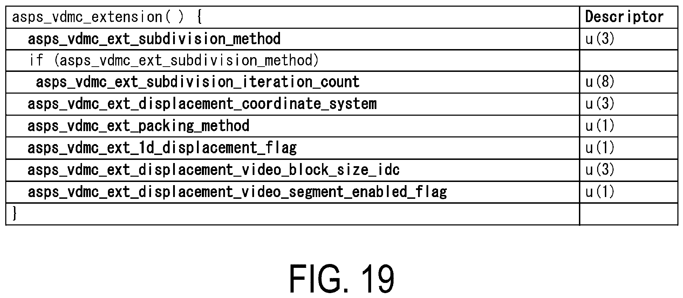

FIG. 19 shows an example of a syntax of displacement slice division parameters. While the example will be described with reference to variable names to be encoded and decoded in an ASPS (variables starting with a prefix asps_), variable names to be encoded and decoded in units of AFPSs (variables starting with a prefix afps_) may also be used.

asp_vdmc_ext_subdivision_method (afps_vdmc_ext_subdivision_method) indicates a displacement division method. In a case that the value is 0, displacements are not divided. A value of 1 indicates that displacements are divided. In a case that afps_vdmc_ext_subdivision_method is not present, it may be set as follows.

afps_vdmc_ext_subdivision_method = asps_vdmc_ext_subdivision_method asps_vdmc_ext_subdivision_iteration_count (afps _vdmc_ext_subdivision_iteration_count) indicates the number of displacement divisions. This is decoded in a case that asps _vdmc_ext_subdivision _method is not 0. The number of displacement divisions corresponds to the number of LODs lodCount, and in a case that asps_vdmc_ext_subdivision_iteration_count = 0, 1, and 2, the numbers of LODs are 1, 2, and 3, respectively.

asps_vdmc_ext_displacement_coordinate_system indicates the coordinate system as described above.

asps vdmc_ext packing_method indicates a packing method in a case that displacements are packed into a rectangular image. In a case that asps_vdmc_ext_packing_method = 0, scanning is performed forward to set displacement values as two-dimensional pixel values. In a case that asps_vdmc_ext_packing_method = 1, scanning is performed backward to set displacement values as two-dimensional pixel values. In a case that the value of asps_vdmc_ext_packing_method is 0, it may be called forward, and in a case that the value is 1, it may be called "reverse". Alternatively, in the case that the value of asps_vdmc_ext_packing_method is 0, it may be called an "ascending order", and in the case that the value is 1, it may be called a "descending order". In a case that afps_vdmc_ext_packing_method is not present, it may be set as follows.

afps_vdmc_ext_subdivision_method= asps_vdmc_ext_packing_method asps_vdmc_ext_displacement_video_block_size_idc (afps_vdmc_ext_displacement_video_block_size_idc) indicates a basic block size (CTU size) in a case that displacements are encoded using a video codec. In a case that afps_vdmc_ext_video_block_size_idc is not present, it may be set as follows.

afps_vdmc_ext_video_block_size_idc = asps_vdmc_ext_video_block_size_idc asps_vdmc_ext_displacement_video_block_size_idc indicates a basic block size in a case that displacements are rearranged into an image in units of blocks. Block sizes of 16, 32, 64, 128, and 256 may be assigned for asps_vdmc_ext_displacement_video_block_size_idc = 0, 1, 2, 3, and 4, respectively.

blockSize = ctuSize = 16«asps_vdmc_ext_displacement_video_block_size_idc Block sizes of 32, 64, 128, 256, and 512 may also be assigned.

blockSize = ctuSize = 32«asps_vdmc_ext_displaceinent_video_block_size_idc An asps_vdmc_ext_1d_displacement_flag is a flag indicating whether one-dimensional displacements are used. In a case that the value is 1, one-dimensional displacements are used and only normal is included. At this time, the number of displacement components, DisplacementDim, is 1. In a case that the value is 0, three-dimensional displacements are used and the number of displacement components, DisplacementDim, is 3.

An asps_vdmc_ext_displacement_video_segment_enabled_flag is the slice division information described above and is a flag indicating whether displacements are divided into slices in units of components (or whether displacements are divided into slices at the boundaries of components). asps_vdmc_ext_displacement_video_segment_enabled_flag may indicate subpictures for which temporal prediction of VVC or MCTS of HEVC is restricted, which are spatiotemporally independent segments. Subpictures for which temporal prediction of VVC is restricted are subpictures with sps_subpic_treated_as_pic_flag = 1. It may also be indicated that loop filtering between slices (segments) is prohibited (sps_loop_filter_across_subpic_enabled_flag == 0). The syntax name may also be an asps_vdmc_ext_displacement_video_independent_segment_enabled_flag or the like to clarify that the slices (segments) are independent. The syntax name may also be an asps_vdmc_ext_displacement_video_scalable_enabled_flag indicating that division decoding is possible.

In the case of spatiotemporally independent segments, it may be that sps_subpic_treated_as_pic_flag = 1 and sps_loop_filter_across_subpic_enabled_flag == 0.

The sps_subpic_treated_as_pic_flag[i] being 1 indicates that ith subpictures of coded pictures of a CLVS are treated as images in a decoding process other than loop filtering. The sps_subpic_treated_as_pic_flag[i] being 0 indicates that ith subpictures of coded pictures of a CLVS are not treated as images in a decoding process other than loop filtering. The sps_loop_filter_across_subpic_enabled_flag[i] being 1 indicates that a loop filter may be applied between the ith subpictures of coded pictures of a CLVS. The sps_loop_filter_across_subpic_enabled_flag[i] being 0 indicates that no loop filter is applied between the ith subpictures of coded pictures of a CLVS.

In a case that sps_subpic_treated_as_pic_flag = 1, there is a restriction that the picture widths, picture heights, and CTU sizes of a target picture and a reference picture that is an active entry in reference picture list 0 (RefPicList[0]) or reference picture list 1 (RefPicList[1]) are equal. In the case that sps_subpic_treated_as_pic_flag = 1, also in temporal prediction, a right range and a lower range of a reference area are derived based not only on the width and height of the picture but also on the range of the subpicture according to the following formula. That is, the x-coordinate of the reference position is clipped to rightBoundaryPos or lower and the y-coordinate of the reference position is clipped to botBoundaryPos or lower.

rightBoundaryPos = sps_subpic_treated_as_pic_flag? SubpicRightBoundaryPos : pps _pic_width_in_luma_samples - 1
botBoutidaryPos = sps_subpic_treatcd_as_pic_flag ? SubpicBotBoundaryPos : pps_pi c_height_in_luma_saaples - 1

SubpicRightBoundaryPos indicates the right edge of the target subpicture, SubpicBotBoundaryPos indicates the bottom edge of the target subpicture, and pps_pic_width_in_luma_samples and pps_pic_height_in_luma_samples indicate the width and height of the picture.

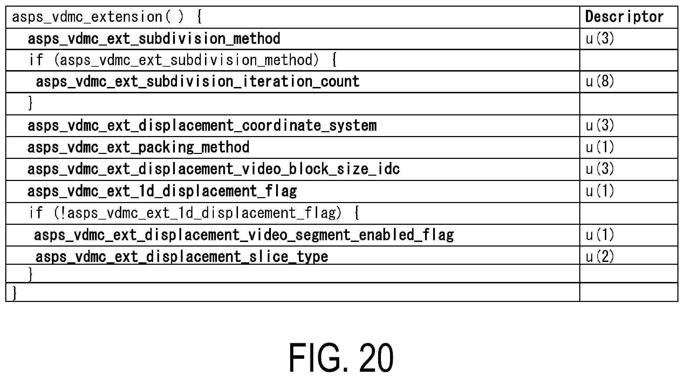

FIG. 20 shows an example of a syntax of displacement slice division parameters. Here, in a case that asps_vdmc_ext_1d_displacement_flag is a predetermined value (a value indicating other than one dimension or a value indicating three dimensions), slice division information (for example, an asps_vdmc_ext_displacement_video_segment_enabled_flag or an asps_vdmc_ext_displacement_slice_type) is decoded from coded data.

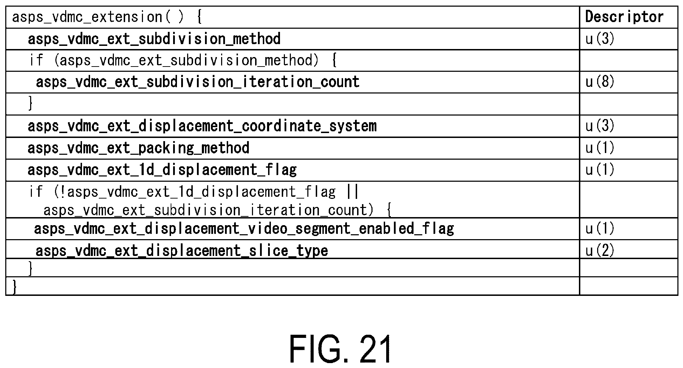

FIG. 21 shows an example of a syntax of displacement slice division parameters. Here, in a case that asps_vdmc_ext_1d_displacement_flag is a predetermined value (a value other than one dimension or a value indicating three dimensions) or the number of LOD divisions is 1 or more (asps _vdmc_ext_subdivision_iteration_count > 0), slice division information (for example, an asps_vdmc_ext_displacement_video_segment_enabled_flag or an asps vdmc_ext_displacement slice _type) is decoded from coded data.

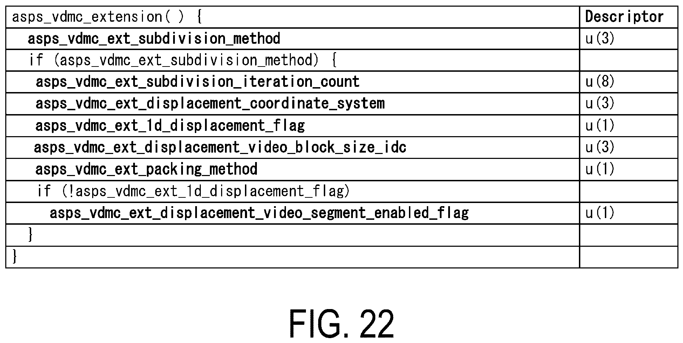

FIG. 22 shows an example of a syntax of displacement slice division parameters. Here, in a case that asps _vdmc_ext_subdivision _method is a predetermined value indicating division, syntax elements relating to displacement features and a coding method are decoded. Syntax elements relating to displacement features and a coding method are, for example, asps _vdmc_ext_subdivision_iteration_count, asps _vdmc_ext_displacement_coordinate _system, asps_vdmc_ext_1d_displacement_flag, asps_vdmc_ext_displacement_video_block_size_idc, asps_vdmc_ext_packing_method, and asps_vdmc_ext_displacement_video_segment_enabled_flag. This achieves the advantage that the amount of code can be reduced, because unnecessary syntax elements are not transmitted in a case that displacements are not divided into slices.

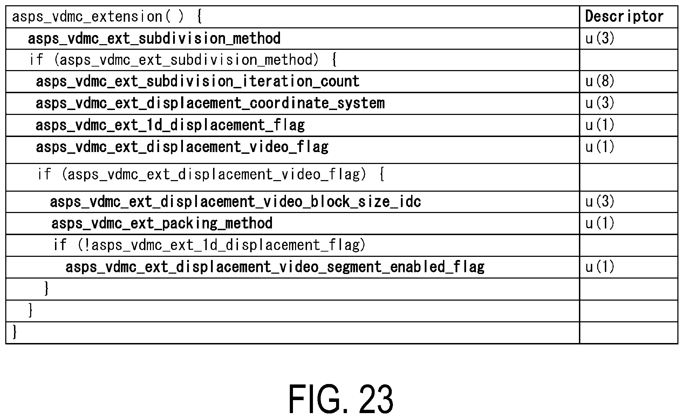

FIG. 23 shows an example of a syntax of displacement slice division parameters. Here, a certain syntax element asps vdmc_ext_displacement_video_flag is decoded. An asps _vdmc_ext_displacement_video_flag is a syntax element indicating whether to transmit displacements using a video codec. In a case that asps _vdmc_ext_displacement_video_flag indicates that displacements are transmitted using a video codec, parameters used in a case that displacements are packed (aligned) into an image are decoded. The parameters relating to displacement packing are, for example, a block size asps_vdmc_ext_displacement_video_block_size_idc, a packing method asps_vdmc_ext packing _method, and slice division information asps_vdmc_ext_displacement_video_segment_enabled_flag. This achieves the advantage that the amount of code can be reduced, because unnecessary syntax elements are not transmitted in a case that displacements are transmitted using arithmetic codes (in a case that no video codec is used). A flag asps_vdmc_ext_ displacement_arithmetric_coding_flag indicating whether to transmit displacements using arithmetic codes may be used instead of asps_vdmc_ext_displacement_video_flag. In this case, "if (! asps_vdmc_ext_displacement_arithmetric_co ding_flag)" is used instead of the determination of "if (asps_vdmc_ext_displacement_video_flag)." That is, the parameters relating to displacement packing are encoded and decoded in a case that asps _vdmc_ext_displacement_arithmetric_coding_flag does not indicate that arithmetic codes are used.

Operation of Mesh Displacement Decoder

The video decoder 3051 decodes a geometry video stream (a V3C_GVD video stream) that has been encoded using VVC, HEVC, or the like and outputs a decoded image (a mesh displacement image or a mesh displacement array) whose pixel values are (quantized) mesh displacements. The color components of the geometry are represented by DecGeoChromaFormat. The image may be in a YCbCr 4:2:0 format. The mesh displacement image may also be a transformed mesh displacement image. The mesh displacement image may also be a residual of a mesh displacement image.

The displacement unmapper 3052 generates mesh displacements from the mesh displacement image. Specifically, the displacement unmapper 3052 derives a mesh displacement Qdisp[pos][compIdx] which is a one-dimensional signal in units of components compIdx (= cIdx) from gFrame[compIdx][y][x], which is a two-dimensional mesh displacement image, according to the correspondence of coordinate positions. The gFrame may be an image array DecGeoFrames[mapIdx][frameIdx] or GeoFramesNF[mapIdx][compTimeIdx] decoded from a geometry video stream (a V3C_GVD video stream). Here, the correspondence of coordinate positions may be that of a Z-order scan in units of blocks. NF is an abbreviation for nominal format and is an image whose image size, color sampling, or the like has been adjusted. The frameIdx and compTimeIdx are composition time indices. The name of the array of the mesh displacement images gFrame[compIdx][y][x] may be a quantized displacement wavelet coefficient dispQuantCoeffFrame or the like and the order of the indices of the array may also be dispQuantCoeffFrame[x][y][compIdx] without being limited to gFrame [compIdx][y][x] (the same applies hereinafter).

The displacement unmapper 3052 derives DisplacementDim according to the value of the flag asps_vdmc_ext_1d_displacement_flag indicating whether one-dimensional displacements decoded from coded data are used.

DisplacementDim = (asps_vdmc_ext_1d_displacement_flag) ? 1 : 3

Here, asps_vdmc_ext_1d_displacement_flag = 1 indicates that only one dimensions of three-dimensional displacements are transmitted. This indicates that normal or x components (first components) of displacements are present in a (compressed) geometry image. In a case that the one-dimensional flag is true, the displacement unmapper 3052 infers that the remaining two components are zero. asps_vdmc_ext_1d_displacement_flag = 0 indicates that all three components of displacements are present in the (compressed) geometry image.

The displacement unmapper 3052 derives the number of blocks blockCount from the number of mesh displacements (the number of points) verCoordCount and derives a displacement height dispCompHeight from block-Count. The blocks are displacement coefficient blocks and blockSize is a variable indicating the size of each displacement coefficient block. "width" and "height" are variables indicating the width and height of the mesh displacement image.

```
pixelsPerBlock = blockSize * blockSize
```

$$\text{widthInBlocks = width / blockSize}$$

$$\text{shift = (1 << bitDepth) >> 1}$$

$$\text{blockCount = (verCoordCount + pixelsPerBlock - 1) / pixelsPerBlock}$$

$$\text{heightInBlocks = (blockCount + widthInBlocks - 1) / widthInBlocks}$$

In one configuration, the displacement unmapper 3052 may use dispCompHeight decoded from a syntax element (for example, asps_vdmc_ext_displacement_component height) as described above.

In another configuration, in a case that mesh displacements are divided into slices (in a case that the displacementSliceType is a predetermined value or in a case that displacementSliceFlag is true), the displacement unmapper 3052 may derive dispCompHeight using 1/3 of the height of the mesh division image.

$$\text{dispCompHeight = height / 3}$$

In another configuration, in a case that mesh displacements are divided into slices (in a case that the displacementSliceType is a predetermined value or in a case that displacementSliceFlag is true), the displacement unmapper 3052 may derive the height dispCompHeight of an image corresponding to each component of three-dimensional mesh displacement vectors by performing alignment to a predetermined size according to the size of the coded tree unit (CTU Size, ctuSize, or videoBlockSize) of the codec used to encode the displacements. The size is not limited to the CTU size and may be a predetermined block size of a mesh image. In this case, the size is referred to as videoBlockSize instead of ctuSize.

$$\text{dispCompHeight = heightInBlock * blockSize}$$

$$\text{dispCompHeight = (dispCompHeight + ctuSize - 1) / ctuSize * ctuSize}$$

$$\text{dispCompHeight = (dispCompHeight + ctuSize - 1) \& ~(ctuSize - 1)}$$

Here ~ is a bitwise negation operator and inverts each bit.

Namely, dispCompHeight may be derived as a constant multiple of the predetermined value ctuSize.

It may also be that blockSize = ctuSize. It may also be that blockSize = ctuSize regardless of the value of displacementSliceFlag.

Here, the displacement unmapper 3052 may derive ctuSize from the parameters SPS (Sequence Parameter Set) of the geometry video stream of the codec indicated by gi_geometry_codec _id[DecAtlasID] of V3C.

The displacement unmapper 3052 may decode ctuSize from coded data in NAL units of an atlas, for example, from a syntax element of an ASPS. The displacement unmapper 3052 may also decode the value of ctuSizeIdx (videoBlockSizeIdx) and derive ctuSize from 16<<ctuSizeIdx, 32<<ctuSizeIdx, or 64<<ctuSizeIdx.

For example, the displacement unmapper 3052 may use 64 in a case that gi_geometry_codec_id[DecAtlasID] is HEVC and 128 in a case that it is VVC as described below.

ctuSize = ptl_profile_codec_group_idc == 3 (VVC) ? 128 : 64

Here, the value of ptl_profile_codec_group_idc being 0 indicates AVC Progressive High, 1 indicates HEVC Main 10, 2 indicates HEVC Main 444, and 3 indicates VVC Main 10.

4CC code of ctuSize = gi_geometry_codec _id[DecAtlasID] indicates HEVC ? 64:128

Here, the character strings of 4CC codes indicating HEVC and VVC are "hev1" and "vvi1", respectively.

Alternatively, the displacement unmapper 3052 may fixedly use the larger of the maximum value 64 of the HEVC CTU size and the maximum value 128 of the VVC CTU size.

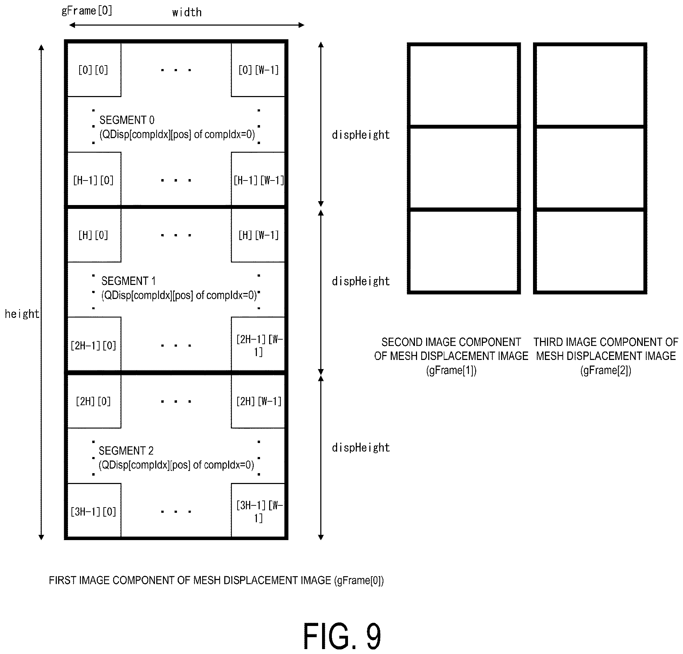

FIG. 9 illustrates an example in which a mesh displacement image gFrame is divided into the number of segments (slices) corresponding to the number of dimensions of the geometry. Here, a mesh displacement image gFrame is divided into three slices and the values of the first, second, and third components of QDisp are aligned in a first component of gFrame. Here, W = width, H = height.

In one configuration, the displacement unmapper 3052 derives a (quantized) mesh displacement array Qdisp from a mesh displacement image gFrame of 3 * height * width mesh displacements. In a configuration described below, the 3D data decoding apparatus contains a video decoder configured to decode a mesh displacement image decoded from a geometry video stream in which a Unit Type of the coded data is V3C_GVD and a displacement unmapper configured to derive a mesh displacement QDisp[compIdx][pos] per position pos and component compIdx from a mesh displacement image gFrame[compIdx][y][x] having an x and y position and a component compIdx, wherein the displacement unmapper is configured to derive a Y coordinate of a geometry image from a product of a height dispCompHeight and a variable compIdx from 0 to a value indicating the number of dimensions DisplacementDim of geometry minus 1 to derive the mesh displacement in a case that the geometry image is in a 4:2:0 format.

Here, in the case of 4:2:0 images (DecGeoChromaFormat == 1), the displacement unmapper 3052 may derive Qdisp from gFrame[0][y][x], which is the first component (luma (Y) image component) of gFrame, according to dispCompHeight.

```
if (!asps_vdmc_ext_1d_displacement_flag)
  last = dispCompHeight * width - 1
else
  last = (width * height) - 1
for (v=0; v<verCoordCount; v++) {  // basic process Frame2QDisp
  v0 = asps_vdmc_ext_packing_method ? last - v : v

  blockIndex = v0 / pixelsPerBlock
  indexWithinBlock = v0 % pixelsPerBlock
  x0 = (blockIndex % widthInBlocks) * blockSize
  y0 = (blockIndex / widthInBlocks) * blockSize
  (x, y) = computeMorton2D(indexWithinBlock)
  x1 = x0 + x
  y1 = y0 + y
  for (compIdx=0; compIdx<DisplacementDim; compIdx++) {
    if (DecGeoChromaFormat==4:2:0) {
      Qdisp[v0][compIdx] =
      gFrame[0][compIdx * dispCompHeight + y1][x1] - shift
    } else {
      Qdisp[v0][compIdx] = gFrame[compIdx][y1][x1] - shift
    }
  }
}
```

Here, asps_vdmc_ext_packing_method = 0 indicates that displacement component samples are packed in ascending order. asps_vdmc_ext_packing_method = 1 indicates that displacement component samples are packed in descending order. computeMorton2D is a function for realizing the Z-order scan and is defined as follows.

```
x = extracOddBits(x) {
  x = x & 0x55555555
  x = (x | (x >> 1)) & 0x33333333
  x = (x | (x >> 2)) & 0x0F0F0F0F
  x = (x | (x >> 4)) & 0x00FF00FF
  x = (x | (x >> 8)) & 0x0000FFFF
}

(x, y) = computeMorton2D(i) {
  x = extracOddBits(i>>1)
  y = extracOddBits(i)
}
```

In the following, only the part of DecGeoChromaFormat == 4:2:0 is indicated while a loop process, a variable derivation process, and branching are omitted and the same processing as above is applied to branching in the case of DecGeoChromaFormat == 4:4:4.

```
for(v=0; v<verCoordCount; v++) {
..
   for(compIdx=0; compIdx<DisplacementDim; compIdx++) {
       Qdisp[v0][compIdx] = gFrame[0][compIdx * dispCompHeight + y1][x1] - shift
   }
}
```

In one configuration, a mesh displacement array Qdisp may be derived based on the value of the displacement slice division parameter dispCompHeight. For example, the displacement unmapper 3052 may decode the value of the height dispCompHeight from coded data.

In one configuration, a mesh displacement array Qdisp may be derived based on the value of the displacement slice division flag displacementSliceFlag. For example, the displacement unmapper 3052 may further derive the value of the height dispCompHeight according to a syntax element indicating whether slices are used.

The displacement unmapper 3052 may also derive the value of the height dispCompHeight as a constant multiple of a predetermined value as described above.

The displacement unmapper 3052 may also derive the value of the height dispCompHeight according to the height of a CTU of a geometry video stream.

The mesh displacement decoder 305 may be configured to decode only the first slice containing the first components of mesh displacements in a case that the displacementSliceType is 1 or 2 or in a case of being specified by external means. In this case, Qdisp may be derived by the following process.

```
DisplacementDim = 1
for (v=0; v<verCoordCount; v++) {
..
   for (compIdx=0; compIdx<DisplacementDim; compIdx++) {
       Qdisp[v0][compIdx] = gFrame[0][compIdx * dispCompHeight + y1][x1] - shift
   }
}
```

or

```
Qdisp[v0][compIdx] = gFrame[0][y1][x1] - shift
```

The above achieves the advantage of realizing scalability because only a necessary portion can be decoded depending on a communication path and the capabilities of the decoding side. The same applies hereinafter.

The mesh displacement decoder 305 may also be configured to decode only the first slice containing the first components of mesh displacements and the second slice containing the second components in a case that the displacementSliceType is 1 or in a case of being specified by external means. In this case, Qdisp may be derived by the following process.

```
DisplacementDim = 2
for (v=0; v<verCoordCount; v++) {
..
  for (compIdx=0; compIdx<DisplacementDim; compIdx++) {
      Qdisp[v0][compIdx] = gFrame[0][compIdx * dispCompHeight + y1][x1] - shift
  }
}
```

Or

```
for (v=0; v<verCoordCount; v++) {
..
  Qdisp[v0][0] = gFrame[0][y1][x1] - shift
  Qdisp[v0][1] = gFrame[0][dispCompHeight + y1][x1] - shift
}
```

The mesh displacement decoder 305 may also be configured to decode only the first slice containing the first components of mesh displacements and the third slice containing the third components in a case that the displacementSliceType is 1 or in a case of being specified by external means. In this case, Qdisp may be derived by the following process.

```
    for (v=0; v<verCoordCount; v++) {
    ...
      Qdisp[v0][0] = gFrame[0][y1][x1] - shift
      Qdisp[v0][2] = gFrame[0][2*dispCompHeight + y1][x1] - shift
    }
```

Processing can be simplified by decoding only some components of mesh displacements as described above. A scalability function can also be realized by decoding slices containing the second and third components of mesh displacements as necessary (for example, decoding only the first components during fast playback and decoding all components during normal playback). Also, even in a case that errors are mixed in coded data, error tolerance can be improved by decoding only slices (components) without errors.

Constraints may be applied to bitstreams to ensure that they are encoded using segments.

For example, in a case that the coordinate system conversion information displacementCoordinateSystem is a predetermined value, it may be a requirement of standard-compliant stream (conformance stream) that a geometry video stream is divided into slices. In particular, it may be a requirement of conformance stream that it is divided into slices in units of components of mesh displacements.

According to this, in a case that a syntax element indicating whether to perform encoding in units of segments indicates that segments are used, the 3D data decoding apparatus may decode a geometry video stream that has been encoded using segments in units of components compIdx of a mesh image.

For example, in a case that asps_vdmc_ext_1d_displacement_flag is a predetermined value (for example, 1), it may be a requirement of standard-compliant stream (conformance stream) that a geometry video stream is divided into slices. In particular, it may be a requirement of a conformance stream that it is divided into slices in units of components of mesh displacements.

According to this, the 3D data decoding apparatus always decodes a geometry video stream that has been encoded using segments in units of components compIdx of a mesh image in a case that the geometry video stream has been one-dimensionally encoded.

Decoding and Derivation for Each Level of Details

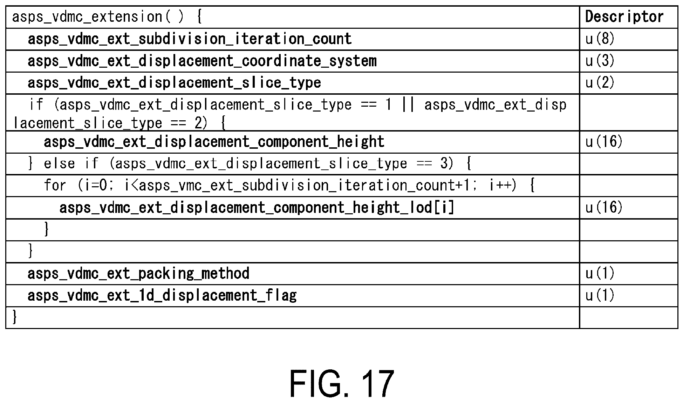

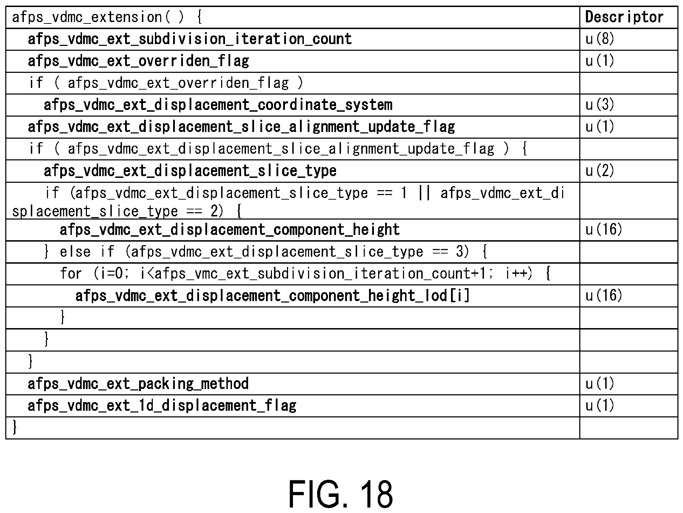

The mesh displacement decoder 305 may also be configured to decode and derive an individual displacement slice division parameter for each level of details (levelOfDetails, LOD) of the mesh. FIGS. 17 and 18 show examples in which in a case that the slice_type is 1 or 2, the same displacement division parameter is used regardless of the level of details of the mesh as in FIGS. 7 and 8, and in a case that the slice_type is 3, a different displacement division parameter is used for each level of details of the mesh. slice_type = 3 is a type in which a different slice is assigned to each level of details of mesh displacements.

FIG. 17 shows an example of a syntax having a configuration in which a displacement slice division parameter asps_vdmc_ext_displacement_component_height_lod[i] for each level of details is transmitted in a sequence level (ASPS). asps_vdmc_ext_displacement_component_height_lod[i] indicates the height of an image corresponding to each component of mesh displacements.

FIG. 18 shows an example of a syntax having a configuration in which a displacement slice division parameter afps_vdmc_ext_displacement_component_height_lod[i] for each level of details is transmitted in a picture/frame level (AFPS). afps_vdmc_ext_displacement_component_height_lod[i] indicates the height of a slice in an image corresponding to each component of mesh displacements.

Parts of the syntax elements in FIGS. 17 and 18 that are not described are defined the same as in FIGS. 7 and 8.

The displacement unmapper 3052 may derive Qdisp by the following process.

```
lodCount = asps_vdmc_ext_subdivision_iteration_count + 1
offsetHeight = 0
for (compIdx=0; compIdx<DisplacementDim; compIdx++) {
  for (lodIdx=0; lodIdx<lodCount; lodIdx++) {
    if (!asps_vdmc_ext_1d_displacement_flag)
      last = (offsetHeight + dispCompHeight[lodIdx]) * width - 1
    else
      last = (width * height) - 1
    vStart = lodIdx ? verCoordCount[lodIdx - 1] : 0
    vEnd = vStart + verCoordCount[lodIdx]
    for (v=vStart; v<vEnd; v++) {
      v0 = asps_vdmc_ext_packing_method ? last - v : v
      blockIndex = v0 / pixelsPerBlock
      indexWithinBlock = v0 % pixelsPerBlock
      x0 = (blockIndex % widthInBlocks) * blockSize
      y0 = (blockIndex / widthInBlocks) * blockSize
      (x, y) = computeMorton2D(indexWithinBlock)
      x1 = x0 + x
      y1 = y0 + y
      if (DecGeoChromaFormat == 4:2:0) {
        Qdisp[v0][compIdx] =
          gFrame[0][offsetHeight + compIdx * dispCompHeight[lodIdx] + y1][x1] -
    shift
      } else {
        Qdisp[v0][compIdx] = gFrame[compIdx][offsetHeight + y1][x1] - shift
      }
    }
    offsetHeight += dispCompHeight[lodIdx]
  }
}
```

Here, "width" and "height" are the width and height of a mesh displacement image gFrame[compIdx][y][x] (a quantized displacement wavelet coefficient dispQuantCoeffFrame) (the same applies below). dispCompHeight = height/3 may be used. In particular, in the case of spatiotemporally independent slices (for example, VVC subpictures), it is appropriate to use dispCompHeight = height/3 because the same picture height is used over a plurality of frames.

In a case that slices that are continuous in CTU units are used instead of rectangular slices (in CTU line units), the start position of a slice dispCompPos[lodIdx] decoded from coded data may be used instead of the height of a slice compIdx * dispCompHeight[lodIdx].

The displacement unmapper 3052 may derive Qdisp by the following process.

Example 1 of Processing in Units of LODs

```
lodCount = asps_vdmc_ext_subdivision_iteration_count + 1
offsetHeight = 0
for (lodIdx = 0; lodIdx<lodCount; lodIdx++) {
   if (!asps_vdmc_ext_1d_displacement_flag)
     last = (offsetHeight + dispCompHeight[lodIdx]) * width - 1
   else
     last = (width * height) - 1
   vStart = lodIdx ? verCoordCount[lodIdx - 1] : 0
   vEnd = vStart + verCoordCount[lodIdx]
   for (v=vStart; v<vEnd; v++) {
     v0 = asps_vdmc_ext_packing_method ? last - v : v
     blockIndex = v0 / pixelsPerBlock
     indexWithinBlock = v0 % pixelsPerBlock
     x0 = ( blockIndex % widthInBlocks ) * blockSize
     y0 = ( blockIndex / widthInBlocks ) * blockSize
     (x, y) = computeMorton2D(indexWithinBlock)
     x1 = x0 + x
     y1 = y0 + y
     for (compIdx=0; compIdx<DisplacementDim; compIdx++) {
       if (DecGeoChromaFormat == 4:2:0) {
         Qdisp[v0][compIdx] =
           gFrame[0][offsetHeight + compIdx * dispCompHeight[lodIdx] + y1][x1] -
   shift
       } else {
         Qdisp[v0][compIdx] = gFrame[compIdx][offsetHeight + y1][x1] - shift
       }
     }
   }
   offsetHeight += dispCompHeight[lodIdx]
}
```

Here, asp_vdmc_ext_subdivision_iteration_count and asps_vdmc_ext_displacement_component_height_lod [i] may be replaced with afps_vdmc_ext_subdivision_iteration_count and afps_vdmc_ext_displacement_component_height_lod[i], respectively.

In a case that the displacementSliceType is 3 (a type in which a different slice is assigned to each level of details of mesh displacements), the mesh displacement decoder 305 may be configured to decode displacement slice division parameters for slices containing components at a predetermined level of details of mesh displacements or below only (for example, the component of levelOfDetails = 0 only or the components of levelOfDetails = 0 and 1 only). dispCompHeight = height/3 may be used. In particular, in the case of spatiotemporally independent slices (for example, VVC subpictures), it is appropriate to use dispCompHeight = height/3 because the same picture height is used over a plurality of frames.

Another Configuration for Dividing Slices in units of LODs

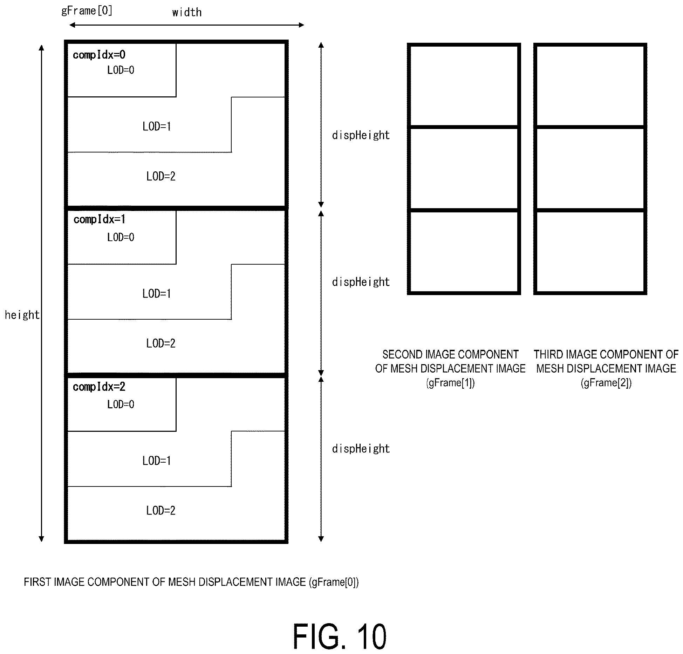

FIG. 10 illustrates an example in which a mesh displacement image gFrame is divided into the number of segments (slices) corresponding to the number of dimensions of the geometry and LODs. Here, a mesh displacement image gFrame is divided into three slices and the values of the first, second, and third components of QDisp are aligned in a first component of gFrame. Here, W = width, H = height.

The displacement unmapper 3052 may derive Qdisp from a mesh displacement image divided into slices in units of LODs by the following process. Here, levelOfDetailAttributeCounts[i] is a variable indicating the start position pos of mesh displacements of an LOD indicated by index i + 1.

In a case that a displacement slice division parameter decoded from coded data indicates LOD packing, the displacement unmapper 3052 aligns each LOD size numBlocksInLod to a constant multiple of the block size pixelsPer-Block. The displacement unmapper 3052 may derive Qdisp by looping blocks in units of LODs using the block size. The case that the displacement slice division parameter indicates LOD packing is, for example, the case that the displacementSliceType is a predetermined value, which is indicated by lodBlockPacking = 1. lodBlockPacking = 0 is a case in which no LOD packing is applied. It may also be that lodBlockPacking = displacementSliceFlag.

A formula for deriving the number of blocks in each LOD that is aligned to a constant multiple of the block size for each LOD is expressed, for example, as follows.

```
numBlocksInLod[0] =
( levelOfDetailAttributeCounts[0] + pixelsPerBlock - 1 ) / pixelsPerBlock
```

In a case that it is indicated that a mesh displacement image (a geometry video stream) is divided into slices, pixelsPerBlock may be derived from ctuSize (blockSize = ctuSize). ctuSize may also be included in and decoded from a displacement slice division parameter or may be determined based on the type of codec. A constant such as 128 may be used for ctuSize. pixelsPerBlock may also be derived from ctuSize in a case that the displacement slice division parameter indicates LOD packing.

In another configuration, the number of blocks in each LOD aligned to a constant multiple of the block size may be directly transmitted as a displacement slice division parameter. In this case, the number of blocks in each LOD may be derived as follows.

numBlocksInLod[i] = dispCount[i], i=0.. lodCount The number of blocks in each LOD may also be derived as follows.

numBlocksInLod[i] = 32«dispCountIdx[i], i=0.. lodCount Here, 32 may be replaced with 64, 128, or ctuSize.

Example 2 of Processing in Units of LODs

```
lodCount = asps_vdmc_ext_subdivision_iteration_count + 1
pixelsPerBlock = blockSize * blockSize
widthInBlocks = width / blockSize
shift = (1 << bitDepth) >> 1
if( lodBlockPacking ) {
  blockSize = ctuSize
  pixelsPerBlock = blockSize * blockSize
  blocksInVideo = ( width * height - 1 ) / pixelsPerBlock
  numBlocksInLod[0] =
  ( levelOfDetailAttributeCounts[0] + pixelsPerBlock - 1 ) / pixelsPerBlock
  for( i = 1; i < lodCount; i++ ) {
    numBlocksInLod[i] =
    ( levelOfDetailAttributeCounts[i] - levelOfDetailAttributeCounts[i - 1]
+ pixelsPerBlock - 1 ) / pixelsPerBlock
  }
  for( lodIdx = 0; lodIdx < lodCount; lodIdx++ ) {
    if ( lodIdx == 0 ) {
```

```
                vStart = 0
                vEnd = levelOfDetailAttributeCounts[ lodIdx ]
            } else {
                vStart = vStart + numBlocksInLod[ lodIdx - 1]
                vEnd = vStart + numBlocksInLod[ lodIdx ]
            }
        for( v = vStart; v < vEnd; v++ ) {
            blockIndex = v / pixelsPerBlock
            indexWithinBlock = v % pixelsPerBlock
            if( asps_vdmc_ext_packing_method ){
                blockIndex = blocksInVideo - blockIndex
                indexWithinBlock = pixelsPerBlock - 1 - indexWithinBlock
            }
            x0 = (blockIndex % widthInBlocks) * blockSize
            y0 = (blockIndex / widthInBlocks) * blockSize
            ( x, y ) = computeMorton2D(indexWithinBlock)
            x = x0 + x
            y = y0 + y
            for( compIdx = 0; compIdx < DisplacementDim; compIdx ++ ) {
                if (DecGeoChromaFormat == 4:2:0) {
                    Qdisp[v][compIdx] =
                    gFrame[compIdx][y+compIdx*dispCompHeight][x] - shift
                } else {
                    QDisp[v][compIdx] = gFrame[compIdx][y][x] - shift
                }
            }

        }
    }
} else {
    // same as basic process Frame2QDisp (description omitted)
}
```

dispCompHeight = height/3 may be used. In particular, in the case of spatiotemporally independent slices (for example, VVC subpictures), it is appropriate to use dispCompHeight = height/3 because the same picture height is used over a plurality of frames.

Example 3 of Processing in Units of LODs

The displacement unmapper 3052 may derive a block size blockSize, which is the scan unit of displacements of a mesh displacement image, using ctuSize decoded from coded data as is described below. According to this, the encoder can freely set a block size used in a geometry video stream of a mesh displacement image and can match the scan unit of mesh displacements with the block size of a video stream. In a loop for each LOD from 0 to lodCount, the displacement unmapper 3052 may derive the start and length of a block and vStart and vEnd outside the loop and derive an updated vStart such that it is equal to the last vEnd just before the end of the loop and drive vEND as a value obtained by adding the size of a predetermined number of blocks to the vStart (i.e., vEnd = startBlock + numBlocksInLod[lodIdx + 1]).

```
lodCount = asps_vdmc_ext_subdivision_iteration_count + 1
blockSize = ctuSize
```

Or

```
if (lodBlockPacking) blockSize = ctuSize
pixelsPerBlock = blockSize * blockSize
widthInBlocks = width / blockSize
shift = (1 << bitDepth) >> 1

if( lodBlockPacking ) {
  blocksInVideo = ( width * height + pixelsPerBlock - 1 ) / pixelsPerBlock
  numBlocksInLod[0] =
  ( levelOfDetailAttributeCounts[0] + pixelsPerBlock - 1 ) / pixelsPerBlock
  for( i = 1; i < lodCount; i++ ) {
    numBlocksInLod[i] =
    ( levelOfDetailAttributeCounts[i] - levelOfDetailAttributeCounts[i - 1]
+ pixelsPerBlock - 1 ) / pixelsPerBlock
  }
  startBlock = 0
  for( lodIdx = 0; lodIdx < lodCount; lodIdx++ ) {
    vStart = 0
    vEnd = levelOfDetailAttributeCounts[ lodIdx ]
    for( v = vStart; v < vEnd; v++ ) {
      blockIndex = v / pixelsPerBlock
      indexWithinBlock = v % pixelsPerBlock
      if( asps_vdmc_ext_packing_method ){
        blockIndex = blocksInVideo - blockIndex
        indexWithinBlock = pixelsPerBlock - 1 - indexWithinBlock
      }
      x0 = (blockIndex % widthInBlocks) * blockSize
      y0 = (blockIndex / widthInBlocks) * blockSize
      ( x, y ) = computeMorton2D(indexWithinBlock)
      x = x0 + x
      y = y0 + y
      for( compIdx = 0; compIdx < DisplacementDim; compIdx ++ ) {
        if (DecGeoChromaFormat == 4:2:0) {
          Qdisp[v][compIdx] =
          gFrame[0][y+compIdx*dispCompHeight][x] - shift
        } else {
          QDisp[v][compIdx] = gFrame[compIdx][y][x] - shift
        }
      }
    }
    vStart = vEnd
    vEnd = vStart + numBlocksInLod[lodIdx+1]
  }
} else {
  // same as basic process Frame2QDisp (description omitted)
}
```

The processing of lodBlockPacking = 1 may always be applied without using the lodBlockPacking flag (the same applies hereinafter). In the above, dispCompHeight = height/3 may also be used. In particular, in the case of spatiotemporally independent slices (for example, VVC subpictures), it is appropriate to use dispCompHeight = height/3 because the same picture height is used over a plurality of frames.

Example 4 of Processing in Units of LODs

Further, the displacement unmapper 3052 may set lodCount as the number of LODs in a case that processing is performed in units of LODs (in the case of lodBlockPacking), set the lodCount to 0 in other cases, calculate a start position and an end position for each LOD and each block in advance, and derive QDisp through an LOD-based and point-based loop as is described below.

```
lodCount = asps_vdmc_ext_subdivision_iteration_count + 1
blockSize = ctuSize  // or if (lodBlockPacking) blockSize = ctuSize
pixelsPerBlock = blockSize * blockSize
```

```
widthInBlocks = width / blockSize
shift = (1 << bitDepth) >> 1
if(lodBlockPacking) {
  blocksInVideo = ( width * height - 1 ) / pixelsPerBlock
  numBlocksInLod[0] =
  ( levelOfDetailAttributeCount + pixelsPerBlock - 1 ) / pixelsPerBlock
  for( i = 1; i < lodCount; i++ ) {
    numBlocksInLod[i] =
    ( levelOfDetailAttributeCounts[i] - levelOfDetailAttributeCounts[i - 1]
+ pixelsPerBlock - 1 ) / pixelsPerBlock
  }
  startBlock[0] = 0
  extraPoints = 0
  for( lodIdx = 1; lodIdx < lodCount; lodIdx++ ) {
    numPointsInLod = levelOfDetailAttributeCounts[lodIdx] - levelOfDetailAttrib
uteCounts [lodIdx-1]
    numBlockInLod[lodIdx] = (numPointsInLod + pixelsPerBlock - 1) / pixelsPerBl
ock
    vStart[lodIdx] = levelOfDetailAttributeCounts[lodIdx-1]
    vEnd[lodIdx] = levelOfDetailAttributeCounts[lodIdx]
    extraPoints += (numBlockInLod[i] * pixelsPerBlock) - numPointsInLod
    startBlock[lodIdx] = numBlockInLod[lodIdx-1] + startBlock[lodIdx-1]
  }
}
else {
  lodCount = 0
  vStart[0] = vStart
  vEnd[0] = verCoordCount
}
blockCount = (verCoordCount + extraPoints + pixelsPerBlock - 1) / pixelsPerBloc
k
blockHeight = (blockCount + blockSize - 1) / blockSize
dispCompHeight = blockHeight * blockSize
  // in the case that blockSize == ctuSize beforehand, dispCompHeight can be an
 integer multiple of blockSize and it can be aligned.
for( lodIdx = 0; lodIdx < lodCount; lodIdx++ ) {
  for( v = vStart[lodIdx]; v < vEnd[lodIdx]; v++ ) {
    blockIndex = (v - vStart[lodIdx]) / pixelsPerBlock + startBlock[lodIdx]
    indexWithinBlock = (v - vStart[lodIdx]) % pixelsPerBlock
    if( asps_vdmc_ext_packing_method ){
      blockIndex = blocksInVideo - blockIndex
      indexWithinBlock = pixelsPerBlock - 1 - indexWithinBlock
    }
    x0 = (blockIndex % widthInBlocks) * blockSize
    y0 = (blockIndex / widthInBlocks) * blockSize
    ( x, y ) = computeMorton2D(indexWithinBlock)
    x = x0 + x
    y = y0 + y
    for( compIdx = 0; compIdx < DisplacementDim; compIdx ++ ) {
      if (DecGeoChromaFormat == 4:2:0) {
        Qdisp[v][compIdx] =
        gFrame[0][y+compIdx*dispCompHeight][x] - shift
```

```
        } else {
            QDisp[v][compIdx] = gFrame[compIdx][y][x] - shift
        }
      }
    }
  }
```

In the above, processing is simplified because the loop is performed in units of lodCount regardless of whether processing is performed in units of LODs. In the above, dispCompHeight = height/3 may also be used. In particular, in the case of spatiotemporally independent slices (for example, VVC subpictures), it is appropriate to use dispCompHeight = height/3 because the same picture height is used over a plurality of frames.

For example, in a case that the displacementSliceType is a predetermined value (displacementSliceFlag is true), it may be a requirement of standard-compliant stream (conformance stream) that a mesh displacement image (a geometry video stream) is divided into slices. In particular, it may be a requirement of compliant stream that a mesh displacement image (a geometry video stream) is divided into slices in units of LODs. Also, in a case that lodBlockPacking is a predetermined value (for example, 1), it may be a requirement of conformance stream that a mesh displacement image (a geometry video stream) is divided into slices in units of LODs.

According to this, in a case that a syntax element indicating whether to use encoding in units of slices (segments) indicates that slices (segments) are used, the 3D data decoding apparatus may decode a geometry video stream that has been encoded using slices (segments) in units of LODs of a mesh image.

For example, in a case that asps_vdmc_ext_1d_displacement_flag is a predetermined value (for example, 1), it may be a requirement of standard-compliant stream (conformance stream) that a geometry video stream is divided into slices. In particular, it may be a requirement of conformance stream that it is divided into slices in units of mesh displacement LODs.

According to this, the 3D data decoding apparatus always decodes a geometry video stream that has been encoded using segments in units of LODs of a mesh image in a case that the geometry video stream has been one-dimensionally encoded.

asps_vdmc_ext_subdivision_iteration_count and afps_vdmc_ext_subdivision_iteration_count are parameters that indicate the number of mesh division iterations signaled in an ASPS level and AFPS level and are used to derive a displacement slice division parameter for each level of details.

The inverse quantizer 3053 performs inverse quantization based on a quantization scale value iscale to derive a transformed (for example, wavelet-transformed) mesh displacement Tdisp. Tdisp may be a value in a Cartesian coordinate system or a local coordinate system. iscale is a value derived from the quantization parameter of each component of a mesh displacement image.

$$Tdisp[0][pos] = (Qdisp[0][pos] * iscale[0] + iscaleOffset) >> iscaleShift$$

$$Tdisp[1][pos] = (Qdisp[1][pos] * iscale[1] + iscaleOffset) >> iscaleShift$$

$$Tdisp[2][pos] = (Qdisp[2][pos] * iscale[2] + iscaleOffset) >> iscaleShift$$

Here iscaleOffset = 1<<(iscaleShift - 1). iscaleShift may be a predetermined constant or may be a value that has been encoded in a sequence level, a picture/frame level, a tile/patch level, or the like and decoded from coded data.

The inverse transform processing unit 3054 performs an inverse transformation g (for example, an inverse wavelet transformation) and derives a mesh displacement d.

$$d[0][pos] = g(Tdisp[0][pos])$$

$$d[1][pos] = g(Tdisp[1][pos])$$

$$d[2][pos] = g(Tdisp[2][pos])$$

The coordinate system conversion unit 3055 converts the mesh displacement (the coordinate system for mesh displacements) into a Cartesian coordinate system based on the value of coordinate system conversion information displacementCoordinateSystem. Specifically, in a case that displacementCoordinateSystem = 1, a displacement in the local coordinate system is converted to a displacement in the Cartesian coordinate system. Here, d is a three-dimensional vector indicating a mesh displacement before coordinate system conversion. disp is a three-dimensional vector indicating a mesh displacement after coordinate system conversion and is a value in the Cartesian coordinate system. n_vec, t_vec, and b_vec are three-dimensional vectors (in the Cartesian coordinate system) corresponding to the axes of a local coordinate system of a target region or target vertex.

```
if (displacementCoordinateSystem == 0) {
  disp = d
} else if (displacementCoordinateSystem == 1){
  disp = d[0] * n_vec + d[1] * t_vec + d[2] * b_vec
}
```

Derivation methods described above using vector multiplication can be individually expressed as scalars as follows.

```
if (displacementCoordinateSystem == 0) {
  for (i = 0; i < 3; i++) {
    disp[i] = d[i]
  }
} else if (displacementCoordinateSystem == 1){
  for (i = 0; i < 3; i++) {
    disp[i] = d[0] * n_vec[i] + d[1] * t_vec[i] + d[2] * b_vec[i]
  }
}
```

It is also possible to adopt a configuration in which the same variable name is assigned to the values before and after conversion such that disp = d and the value of d is updated through coordinate conversion.
Alternatively, the following configuration may be used.

```
if (displacementCoordinateSystem == 0) {
  disp = d
} else if (displacementCoordinateSystem == 1){
  disp = d[0] * n_vec + d[1] * t_vec + d[2] * b_vec
} else if (displacementCoordinateSystem == 2){
  disp = d[0] * n_vec2 + d[1] * t_vec2 + d[2] * b_vec2
}
```

Here, n_vec2, t_vec2, and b_vec2 are three-dimensional vectors (in the Cartesian coordinate system) corresponding to the axes of a local coordinate system of an adjacent region.
Alternatively, the following configuration may be used.

```
if (displacementCoordinateSystem == 0) {
  disp = d
} else if (displacementCoordinateSystem == 1){
  disp = d[0] * n_vec3 + d[1] * t_vec3 + d[2] * b_vec3
}
```

Here, n_vec3, t_vec3, and b_vec3 are three-dimensional vectors (in the Cartesian coordinate system) corresponding to the axes of a local coordinate system of a target region whose fluctuations are suppressed. For example, vectors in the coordinate system used for decoding are derived from the previous coordinate system and the current coordinate system as follows.

$$n\_vec3 = (w*n\_vec3 + (WT-w)*n\_vec) >> wShift$$

$$t\_vec3 = (w*t\_vec3 + (WT-w)*t\_vec) >> wShift$$

$$b\_vec3 = (w*b\_vec3 + (WT-w)*b\_vec) >> wShift$$

Here, for example, wShift = 2, 3, 4, WT = 1<<wShift, and w = 1 .. WT - 1.

For example, in a case that w = 3 and wShift = 3, the following may be true.

$$n\_vec3 = (3*n\_vec3 + 5*n\_vec) >> 3$$

$$t\_vec3 = (3*t\_vec3 + 5*t\_vec) >> 3$$

$$b\_vec3 = (3*b\_vec3 + 5*b\_vec) >> 3$$

The vectors may be selected according to the value of coordinate system conversion information displacementCoordinateSystem decoded from coded data as in the following configuration.

```
if (displacementCoordinateSystem == 0) {
  disp = d
} else if (displacementCoordinateSystem == 1){
  disp = d[0] * n_vec + d[1] * t_vec + d[2] * b_vec
} else if (displacementCoordinateSystem == 6){
  disp = d[0] * n_vec3 + d[1] * t_vec3 + d[2] * b_vec3
}
```

Reconstruction of Mesh

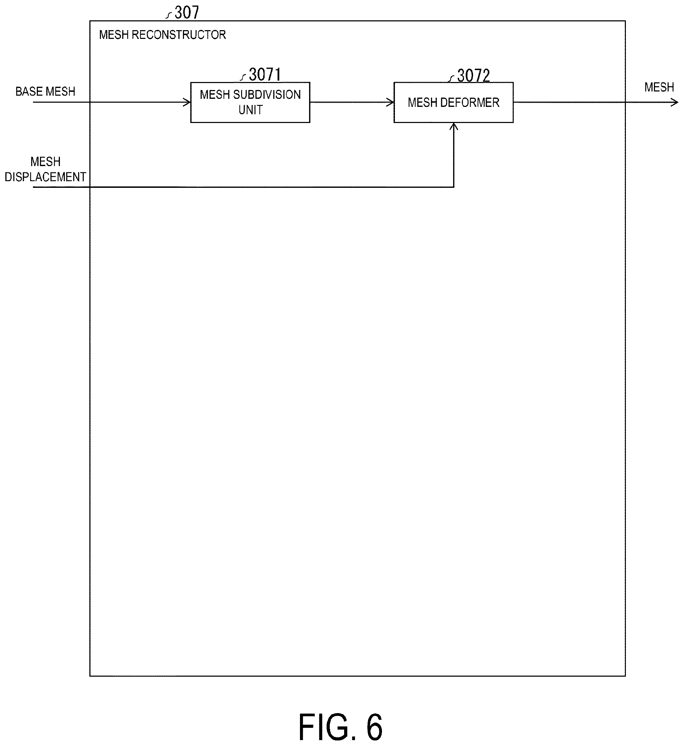

FIG. 6 is a functional block diagram illustrating a configuration of the mesh reconstructor 307. The mesh reconstructor 307 contains a mesh subdivision unit 3071 and a mesh deformer 3072.

The mesh subdivision unit 3071 divides a base mesh output from base mesh decoder 303 to generate a subdivided mesh.

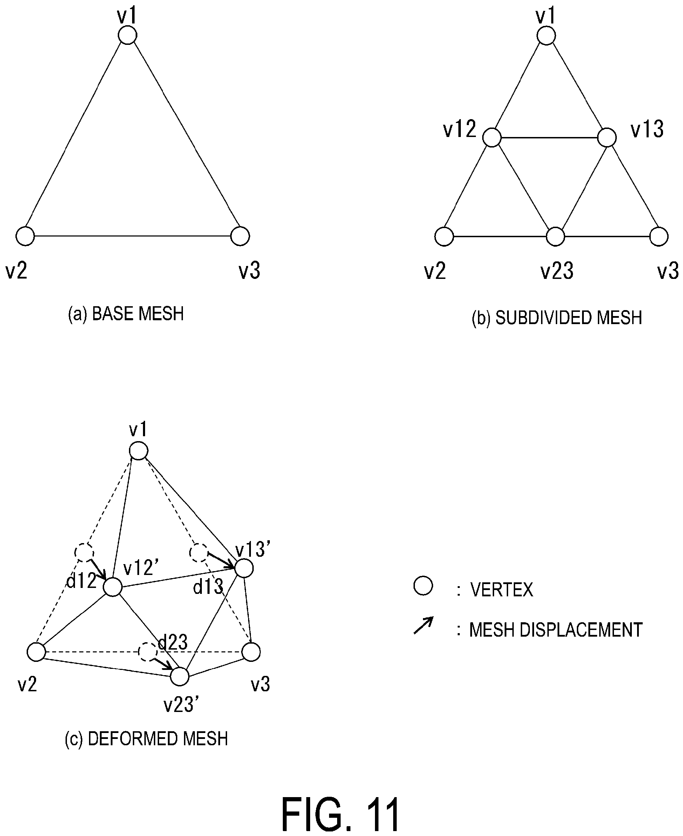

FIG. 11(a) illustrates a part (a triangle) of a base mesh and the triangle contains vertices v1, v2, and v3. v1, v2, and v3 are three-dimensional vectors. The mesh subdivision unit 3071 generates and outputs a subdivided mesh by adding new vertices v12, v13, and v23 to the middles of the sides of the triangle (FIG. 11(b)).

$$v12 = (v1 + v2) / 2$$

$$v13 = (v1 + v3) / 2$$

$$v23 = (v2 + v3) / 2$$

The following may also be used.

$$v12 = (v1 + v2 + 1) >> 1$$

$$v13 = (v1 + v3 + 1) \gg 1$$

$$v23 = (v2 + v3 + 1) \gg 1$$

The mesh deformer 3072 receives the subdivided mesh and mesh displacements d12, d13, and d23 and generates and outputs a deformed mesh by adding the mesh displacements d12, d13, and d23 to the subdivided mesh (FIG. 11(c)). The mesh displacements d12, d13, and d23 are the output of the mesh displacement decoder 305 (the coordinate system conversion unit 3055). The mesh displacements d12, d13, and d23 are mesh displacements corresponding to the vertices v12, v13, and v23 added by the mesh subdivision unit 3071.

$$v12' = v12 + d12$$

$$v13' = v13 + d13$$

$$v23' = v23 + d23$$

d12 = disp[0][], d13 = disp[1][], and d23 = disp[3][] may be satisfied.

Configuration of 3D Data Encoding Apparatus According to First Embodiment

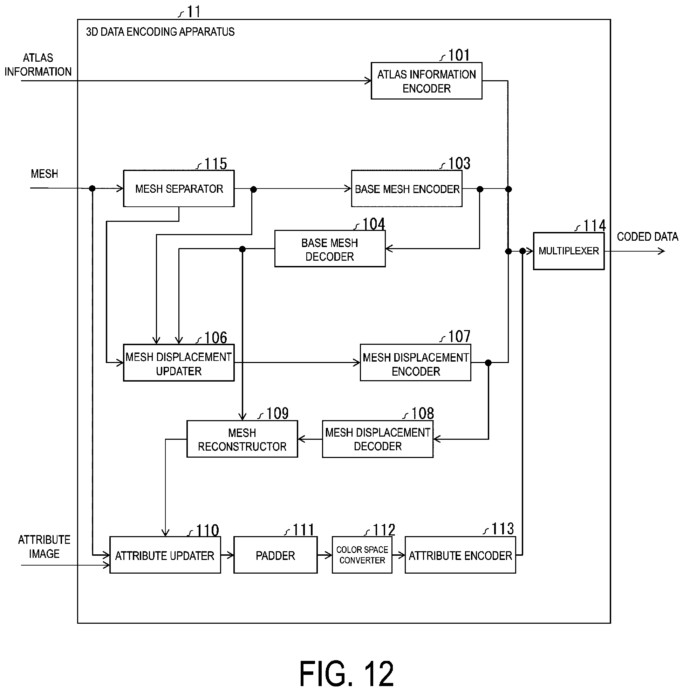

FIG. 12 is a functional block diagram illustrating a schematic configuration of the 3D data encoding apparatus 11 according to the first embodiment. The 3D data encoding apparatus 11 contains an atlas information encoder 101, a base mesh encoder 103, a base mesh decoder 104, a mesh displacement updater 106, a mesh displacement encoder 107, a mesh displacement decoder 108, a mesh reconstructor 109, an attribute updater 110, a padder 111, a color space converter 112, an attribute encoder 113, a multiplexer 114, and a mesh separator 115. The 3D data encoding apparatus 11 receives atlas information, a base mesh, mesh displacements, a mesh, and attribute image as 3D data and outputs coded data.

The atlas information encoder 101 encodes the atlas information and outputs a coded atlas information stream.

The base mesh encoder 103 encodes the base mesh and outputs a coded base mesh stream. Draco or the like is used as a coding scheme.

The base mesh decoder 104 is similar to the base mesh decoder 303 and thus description thereof will be omitted.

The mesh displacement updater 106 adjusts the mesh displacements based on the (original) base mesh and the decoded base mesh and outputs the updated mesh displacement.

The mesh displacement encoder 107 encodes the updated mesh displacements and outputs a coded mesh displacement stream. VVC, HEVC, or the like is used as a coding scheme.

The mesh displacement decoder 108 is similar to the mesh displacement decoder 305 and thus description thereof will be omitted.

The mesh reconstructor 109 is similar to the mesh reconstructor 307 and thus description thereof will be omitted.

The attribute updater 110 receives the (original) mesh, the reconstructed mesh output from the mesh reconstructor 109 (the mesh deformer 3072), and the attribute image and updates the attribute image to match the positions (coordinates) of the reconstructed mesh and outputs the updated attribute image.

The padder 111 receives the attribute image and performs padding processing on an area where pixel values are empty.

The color space converter 112 performs color space conversion from an RGB format to a YCbCr format.

The attribute encoder 113 encodes the YCbCr-format attribute image output from the color space converter 112 and outputs an attribute video stream. VVC, HEVC, or the like is used as a coding scheme.

The multiplexer 114 multiplexes the coded atlas information stream, the coded base mesh stream, the coded mesh displacement stream, and the attribute video stream and outputs the multiplexed data as coded data. A byte stream format, an ISOBMFF, or the like is used as a multiplexing scheme.

Operation of Mesh Separator

The mesh separator 115 generates a base mesh and mesh displacements from a mesh.

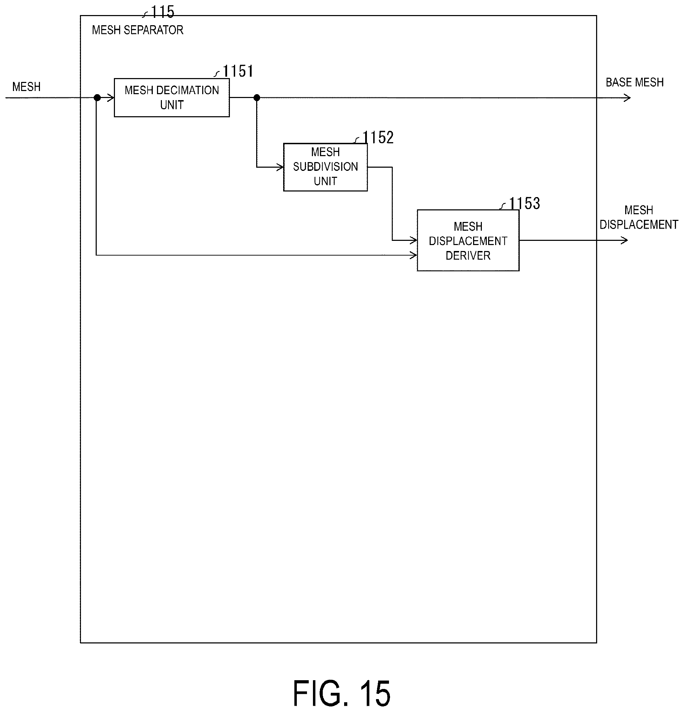

FIG. 15 is a functional block diagram illustrating a configuration of the mesh separator 115. The mesh separator 115 contains a mesh decimation unit 1151, a mesh subdivision unit 1152, and a mesh displacement deriver 1153.

The mesh decimation unit 1151 generates a base mesh by removing some vertices from the mesh.

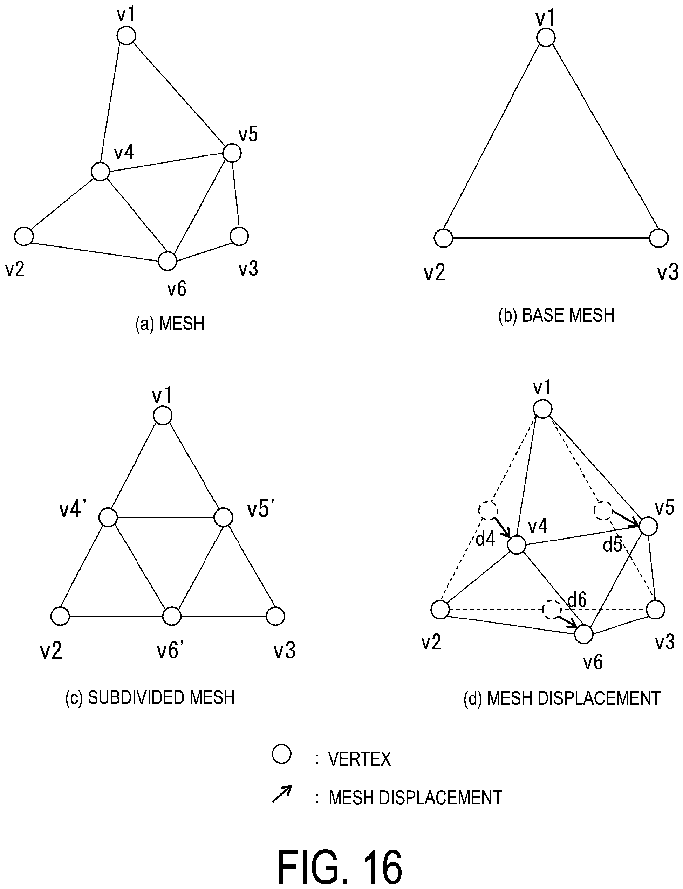

FIG. 16(a) illustrates a part of a mesh and the mesh contains vertices v1, v2, v3, v4, v5, and v6. v1, v2, v3, v4, v5, and v6 are three-dimensional vectors. The mesh decimation unit 1151 generates and outputs a base mesh by removing the vertices v4, v5, and v6 (FIG. 16(b)).

Similar to the mesh subdivision unit 3071, the mesh subdivision unit 1152 divides the base mesh to generate a subdivided mesh (FIG. 16(c)).

$$v4' = (v1 + v2) / 2$$

$$v5' = (v1 + v3) / 2$$

$$v6' = (v2 + v3) / 2$$

Based on the mesh and the subdivided mesh, the mesh displacement deriver 1153 derives and outputs displacements d4, d5, and d6 of the vertices v4, v5, and v6 with respect to vertices v4', v5', and v6' as mesh displacements (FIG. 16(d)).

$$d4 = v4 - v4'$$

$$d5 = v5 - v5'$$

$$d6 = v6 - v6'$$

Base Mesh Coding

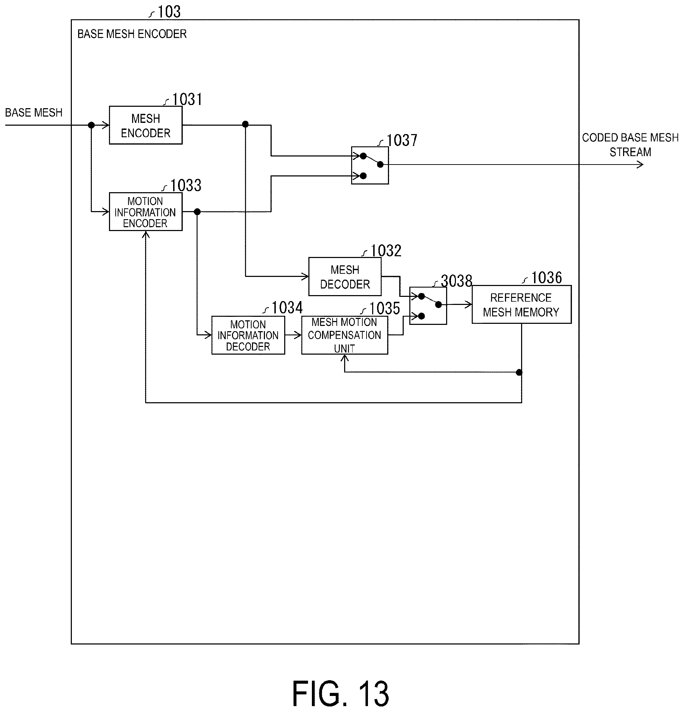

FIG. 13 is a functional block diagram illustrating a configuration of the base mesh encoder 103. The base mesh encoder 103 contains a mesh encoder 1031, a mesh decoder 1032, a motion information encoder 1033, a motion information decoder 1034, a mesh motion compensation unit 1035, a reference mesh memory 1036, a switch 1037, and a switch 1038. The base mesh encoder 103 may contain a base mesh quantizer (not illustrated) after the input of a base mesh. Each of the switches 1037 and 1038 is connected to the side where no motion compensation is performed in a case that the base mesh is to be encoded (intra-coded) without reference to other base meshes (for example, base meshes that have already been encoded). On the other hand, each of the switches 1037 and 1038 is connected to the side where motion compensation is performed in a case that the base mesh is to be encoded (inter-coded) with reference to another base mesh.

The mesh encoder 1031 has an intra encoding function and intra-encodes the base mesh, and outputs a coded base mesh stream. Draco or the like is used as a coding scheme.

The mesh decoder 1032 is similar to the mesh decoder 3031 and thus description thereof will be omitted.

The motion information encoder 1033 has an inter-coding function and inter-encodes the base mesh and outputs a coded base mesh stream. Entropy coding such as arithmetic coding is used as a coding scheme.

The motion information decoder 1034 is similar to the motion information decoder 3032 and thus description thereof will be omitted.

The mesh motion compensation unit 1035 is similar to the mesh motion compensation unit 3033 and thus description thereof will be omitted.

The reference mesh memory 1036 is similar to the reference mesh memory 3034 and thus description thereof will be omitted.

Coding of Mesh Displacements

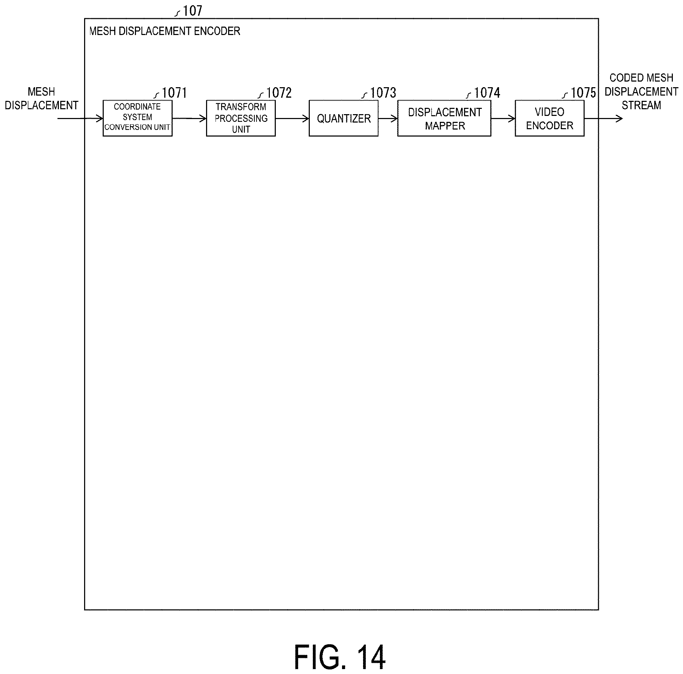

FIG. 14 is a functional block diagram illustrating a configuration of the mesh displacement encoder 107. The mesh displacement encoder 107 contains a coordinate system conversion unit 1071, a transform processing unit 1072, a quantizer 1073, and a displacement mapper 1074 (an image packer or a displacement encoder). The mesh displacement encoder 107 may further contain a video encoder 1075 as illustrated in FIG. 14. Alternatively, the video encoder 1075 may not be included in the mesh displacement encoder 107 and displacement image encoding may be performed using an external image encoding apparatus.

The coordinate system conversion unit 1071 converts the coordinate system for mesh displacements from a Cartesian coordinate system to a coordinate system for encoding displacements (for example, a local coordinate system) based on the value of coordinate conversion information displacementCoordinateSystem. Here, disp is a three-dimensional vector indicating a mesh displacement before coordinate system conversion, d is a three-dimensional vector indicating a mesh displacement after coordinate system conversion, and n_vec, t_vec, and b_vec are three-dimensional vectors (in the Cartesian coordinate system) corresponding to the axes of the local coordinate system.

```
if (displacementCoordinateSystem == 0) {
  d = disp
} else if (displacementCoordinateSystem == 1){
  d = (disp * n_vec, disp * t_vec, disp * b_vec)
}
```

The mesh displacement encoder 107 may update the value of displacementCoordinateSystem in a picture/-frame level.

The syntax shown in FIG. 7 is used in a case that displacementCoordinateSystem is encoded in a sequence level. asps vdmc_ext_displacement_coordinate_system is set to 0 in the case of the Cartesian coordinate system and 1 in the case of the local coordinate system.

The syntax shown in FIG. 8 is used in a case that displacementCoordinateSystem is changed in a picture/frame level. afps_vdmc_ext_overriden_flag is set to 1 in a case that the coordinate system is updated and 0 in a case that the coordinate system is not updated. afps_vdmc_ext_displacement_coordinate_system is set to 0 in the case of the Cartesian coordinate system and 1 in the case of the local coordinate system.

The transform processing unit 1072 performs transformation f (for example, wavelet transformation) and derives a transformed mesh displacement Tdisp. The following is performed for pos = 0 .. NumDisp-1. Here, NumDisp is the number of mesh vertices.

$$Tdisp[0][pos] = f(d[0][pos])$$

$$Tdisp[1][pos] = f(d[1][pos])$$

$$Tdisp[2][pos] = f(d[2][pos])$$

The quantizer 1073 performs quantization based on a quantization scale value "scale" derived from the quantization parameter of each component of mesh displacements to derive a quantized mesh displacement Qdisp.

$$Qdisp[0][pos] = Tdisp[0][pos] / scale[0]$$

$$Qdisp[1][pos] = Tdisp[1][pos] / scale[1]$$

$$Qdisp[2][pos] = Tdisp[2][pos] / scale[2]$$

Alternatively, the scale value may be approximated by a power of 2 and Qdisp may be derived using the following formula.

$$scale[i] = 1 << scale2[i]$$

$$Qdisp[0][pos] = Tdisp[0][pos] >> scale2[0]$$

$$Qdisp[1][pos] = Tdisp[1][pos] >> scale2[1]$$

$$Qdisp[2][pos] = Tdisp[2][pos] >> scale2[2]$$

The displacement mapper 1074 generates an image gFrame from the quantized mesh displacement Qdisp based on the value of the displacement mapping parameter displacementChromaLocationType.

The displacement mapper 1074 packs the first component Qdisp[0] of the (quantized) mesh displacement array into a luma (Y) image component.

The following is performed for x = 0 .. W - 1 and y = 0 .. H - 1.

The following is applied to the width W and height H of the image (for y = 0 .. H - 1 and x = 0 .. W - 1). Here yc = y/2 and xc = x/2.

```
H = dispCompHeight
shift = (1 << bitDepth) >> 1
gFrame[0][    y][x] = Qdisp[0][pos] + shift
gFrame[0][  H+y][x] = Qdisp[1][pos] + shift
gFrame[0][2*H+y][x] = Qdisp[2][pos] + shift
pos++
```

The following is performed for xc = 0 .. W/2 - 1 and yc = 0 .. H/2 - 1.

```
gFrame[1][      yc][xc] = shift

gFrame[1][H/2+yc][xc] = shift

gFrame[1][  H+yc][xc] = shift

gFrame[2][      yc][xc] = shift

gFrame[2][H/2+yc][xc] = shift

gFrame[2][  H+yc][xc] = shift
```

Alternatively, the following may be performed.

```
for (compIdx = 0; compIdx < 3; compIdx++) {
   gFrame[0][compIdx*H+y][x] = Qdisp[compIdx][pos] + shift
   if (compIdx != 0) {
      gFrame[compIdx][compIdx*H/2+yc][xc] = shift
   }
}
pos++
```

Alternatively, the following may be performed.

```
asps_vdmc_ext_subdivision_iteration_count = lodCount - 1
H = 0
for (i=0; i<lodCount; i++) {
  H[i] = dispCount[i] / W + 1
  asps_vdmc_ext_displacement_component_height_lod[i] = H[i]
  H += H[i]
}
shift = (1 << bitDepth) >> 1
y0 = 0
pos0 = 0
for (i=0; i<lodCount; i++) {
  pos = 0
  for (y=0; y<H[i]; y++) {
    for (x=0; x<W; x++) {
      if (pos == dispCount[i]) continue
      gFrame[0][    y0+y][x] = Qdisp[0][pos0+pos] + shift
      gFrame[0][  H+y0+y][x] = Qdisp[1][pos0+pos] + shift
      gFrame[0][2*H+y0+y][x] = Qdisp[2][pos0+pos] + shift
      pos++
    }
  }
  y0 += H[i]
  pos0 += dispCount[i]
}
```

Alternatively, the following may be performed.

```
asps_vdmc_ext_subdivision_iteration_count = lodCount - 1
for (i=0; i<lodCount; i++) {
  H[i] = (dispCount[i] * 3) / W + 1
  asps_vdmc_ext_displacement_component_height_lod[i] = H[i]
}
shift = (1 << bitDepth) >> 1
y0 = 0
pos0 = 0
for (i=0; i<lodCount; i++) {
  pos = 0
```

```
dim = 0
for (y=0; y<H[i]; y++) {
  for (x=0; x<W; x++) {
    if (pos == dispCount[i]) {
      pos = 0
      dim++
    }
    if (dim == 3) continue
    gFrame[0][y0+y][x] = Qdisp[dim][pos0+pos] + shift
    pos++
  }
}
y0 += H[i]
pos0 += dispCount[i]
}
```

The process may be switched depending on DecGeoChromaFormat. That is, the above process is performed in a case that DecGeoChromaFormat = 1 (4:2:0) and the following process is performed in a case that DecGeoChroma-Format = 3 (4:4:4).

$$gFrame[0][y][x] = Qdisp[0][pos]$$

$$gFrame[1][y][x] = Qdisp[1][pos]$$

$$gFrame[2][y][x] = Qdisp[2][pos]$$

$$pos=pos+1$$

The mesh displacement encoder 107 may update the values of displacementSliceType and dispCompHeight in a picture/frame level.

The meanings of displacementSliceType and dispCompHeight are as described above with reference to asps_vdmc_ext_displacement_slice_type and asps_vdmc_ext_displacement_component_height.

The syntax shown in FIG. 8 is used in a case that displacementSliceType is updated in a picture/frame level. The value of displacementSliceType is set in afps_vdmc_ext_displacement_slice_type. The value of dispCompHeight is set in afps_vdmc_ext_displacementcomponent_height.

The video encoder 1075 encodes a YCbCr 4:2:0 format image including the (quantized) mesh displacement image and outputs a coded mesh displacement stream. VVC, HEVC, or the like is used as a coding scheme.

The video encoder 1075 may encode the mesh displacement image by dividing it into slices, one slice for each dispCompHeight. dispCompHeight may be aligned to a predetermined size according to the CTU size.

The video encoder 1075 may encode the mesh displacement image by assigning the first components (for example, D) of mesh displacements to the first slice, the second components (for example, U) to the second slice, and the third components (for example, V) to the third slice (displacementSliceType = 1).

Further, the video encoder 1075 may also encode the mesh displacement image by assigning the first components of mesh displacements to the first slice and the second and third components to the second slice (displacementSliceType = 2).

Processing can be simplified because assigning a different slice to each component of mesh displacements as described above allows the decoding apparatus to decode only some components of mesh displacements. A scalability function can also be realized because the decoding apparatus can decode slices containing the second and third components of mesh displacements as necessary. Also, even in a case that errors are mixed in coded data, error tolerance can be improved because the decoding apparatus can decode only slices (components) without errors.

Although embodiments of the present invention have been described above in detail with reference to the drawings, the specific configurations thereof are not limited to those described above and various design changes or the like can be made without departing from the spirit of the invention.

Application Example

The 3D data encoding apparatus 11 and the 3D data decoding apparatus 31 described above can be used by being installed in various apparatuses that transmit, receive, record, and reproduce 3D data. The 3D data may be natural 3D data captured by a camera or the like or may be artificial 3D data (including CG and GUI) generated by a computer or the like.

Embodiments of the present invention are not limited to those described above and various changes can be made within the scope indicated by the claims. That is, embodiments obtained by combining technical means appropriately modified within the scope indicated by the claims are also included in the technical scope of the present invention.

Industrial Applicability

Embodiments of the present invention are suitably applicable to a 3D data decoding apparatus that decodes coded data into which 3D data has been encoded and a 3D data encoding apparatus that generates coded data into which 3D data has been encoded. The present invention is also suitably applicable to a data structure for coded data generated by a 3D data encoding apparatus and referenced by a 3D data decoding apparatus.

Reference Signs List

11 3D data encoding apparatus
101 Atlas information encoder
103 Base mesh encoder
1031 Mesh encoder
1032 Mesh decoder
1033 Motion information encoder
1034 Motion information decoder
1035 Mesh motion compensation unit
1036 Reference mesh memory
1037 Switch
1038 Switch
104 Base mesh decoder
106 Mesh displacement updater
107 Mesh displacement encoder
1071 Coordinate system conversion unit
1072 Transform processing unit
1073 Quantizer
1074 Displacement mapper
1075 Video encoder
108 Mesh displacement decoder
109 Mesh reconstructor
110 Attribute updater
111 Padder
112 Color space converter
113 Attribute encoder
114 Multiplexer
115 Mesh separator
1151 Mesh decimation unit
1152 Mesh subdivision unit
1153 Mesh displacement deriver
21 Network
31 3D data decoding apparatus
301 Demultiplexer
302 Atlas information decoder
303 Base mesh decoder
3031 Mesh decoder
3032 Motion information decoder

3033 Mesh motion compensation unit
3034 Reference mesh memory
3035 Switch
3036 Switch
305 Mesh displacement decoder
3051 Video decoder
3052 Displacement unmapper
3053 Inverse quantizer
3054 Inverse transform processing unit
3055 Coordinate system conversion unit
307 Mesh reconstructor
306 Attribute decoder
3071 Mesh subdivision unit
3072 Mesh deformer
308 Color space converter
41 3D data display device

**Claims**

1. A 3D data decoding apparatus for decoding coded data, the 3D data decoding apparatus comprising:

   a video decoder configured to decode a mesh displacement image decoded from a geometry video stream in which a Unit Type of the coded data is V3C_GVD; and
   a displacement unmapper configured to derive a mesh displacement QDisp[compIdx][pos] per position pos and component compIdx, from a mesh displacement image gFrame[compIdx][y][x] having an x and y position and a component compIdx,
   wherein the displacement unmapper is configured to derive a Y coordinate of a geometry image from a product of a height dispCompHeight and a variable compIdx from 0 to a value indicating the number of dimensions DisplacementDim of geometry minus 1 to derive the mesh displacement, in a case that the geometry image is in a 4:2:0 format.

2. The 3D data decoding apparatus according to claim 1, wherein the displacement unmapper is configured to decode, from coded data, a syntax element indicating whether slices are used.

3. The 3D data decoding apparatus according to claim 1, wherein the displacement unmapper is configured to derive a value of the height dispCompHeight, according to a syntax element indicating whether slices are used.

4. The 3D data decoding apparatus according to claim 1, wherein the displacement unmapper is configured to derive a value of the height dispCompHeight to be a constant multiple of a predetermined value.

5. The 3D data decoding apparatus according to claim 4, wherein the displacement unmapper is configured to derive a value of the height dispCompHeight, according to a height of a CTU of the geometry video stream.

6. The 3D data decoding apparatus according to claim 1, wherein the 3D data decoding apparatus is configured to decode a geometry video stream that has been encoded using segments in units of components compIdx of a mesh image, in a case that a syntax element indicating whether to use encoding in units of segments such as slices indicates that segments are used.

7. The 3D data decoding apparatus according to claim 1, wherein the 3D data decoding apparatus is configured to always decode a geometry video stream that has been encoded using segments in units of components compIdx of a mesh image, in a case that the geometry video stream has been one-dimensionally encoded.

8. The 3D data decoding apparatus according to claim 1, wherein the 3D data decoding apparatus is configured to always decode a geometry video stream that has been encoded using segments in units of components compIdx of a mesh image, in a case that the geometry video stream has been one-dimensionally encoded using the 4:2:0 format.

9. A 3D data encoding apparatus for encoding 3D data, the 3D data encoding apparatus comprising:

a video encoder configured to encode a mesh displacement image encoded from a geometry video stream in which a Unit Type of the coded data is V3C_GVD; and

a displacement mapper configured to derive a mesh displacement image gFrame[compIdx][y][x] having an x and y position and a component compIdx, from a mesh displacement QDisp[compIdx][pos],

wherein the displacement mapper is configured to derive a Y coordinate of a geometry image from a product of a height dispCompHeight and a variable compIdx from 0 to a value indicating the number of dimensions DisplacementDim of geometry minus 1 to derive the geometry image, in a case that the geometry image is in a 4:2:0 format.

1

T → | 3D DATA ENCODING APPARATUS | Te → ⬭ Te → | 3D DATA DECODING APPARATUS | Td → | 3D DATA DISPLAY DEVICE |

⌐11    ⌐21    ⌐31    ⌐41

# FIG. 1

| V3C sample stream | sample stream header | V3C unit#0 | V3C unit#1 | V3C unit#2 | V3C unit#3 | V3C unit#4 | V3C unit#5 | ---- | V3C unit#N-1 |

| V3C unit stream | V3C unit#0 | V3C unit#1 | V3C unit#2 | V3C unit#3 | V3C unit#4 | V3C unit#5 | ---- | V3C unit#N-1 |

| V3C VPS | Unit Type = V3C_VPS | V3C parameter set |

| ATLAS DATA | UnitType =V3C_AD | VPS ID | atlasID | sample stream nal header | NAL unit #0 | NAL unit #1 | |

| NAL unit | NAL UnitType | Layer ID | Temporal ID | RBSP (Raw byte sequence payload) |

| RBSP (Raw byte sequence payload) | ASPS #0 | AAPS #0 | ATL #0 | AFPS #0 | SEI #0 | ---------- |

| ATL (Atlas tile layer) | ATL header | ATL data unit (patch information data etc.) |

| SEI | payloadType | payloadSize | sei_payload | |

| ATTRIBUTE DATA | UnitType =V3C_AVD | VPS ID | atlasID | attrIdx | partIdx | mapIdx | auxFlag | Video Stream |

| GEOMETRY DATA | UnitType =V3C_GVD | VPS ID | atlasID | mapIdx | auxFlag | Video Stream |

| OCCUPANCY DATA | UnitType =V3C_OVD | VPS ID | atlasID | Video Stream |

| MESH DATA (BASE MESH) | UnitType =V3C_MD | VPS ID | atlasID | mesh_payload |

# FIG. 2

FIG. 3

FIG. 4

## FIG. 5

307

MESH RECONSTRUCTOR

3071

BASE MESH → → | MESH SUBDIVISION UNIT |

3072

→ | MESH DEFORMER | → MESH

MESH DISPLACEMENT

# FIG. 6

| atlas_sequence_parameter_set_rbsp( ) { | Descriptor |
|---|---|
| asps_atlas_frame_parameter_set_id | ue(v) |
| ... | |
| asps_extension_present_flag | u(1) |
| if( asps_extension_present_flag ) { | |
| asps_miv_extension_present_flag | u(1) |
| asps_vpcc_extension_present_flag | u(1) |
| asps_vdmc_extension_present_flag | u(1) |
| asps_extension_5bits | u(5) |
| } | |
| ... | |
| if( asps_vdmc_extension_present_flag ) | |
| asps_vdmc_extension( ) | |
| ... | |
| } | |

| asps_vdmc_extension( ) { | Descriptor |
|---|---|
| asps_vdmc_ext_displacement_coordinate_system | u(3) |
| asps_vdmc_ext_displacement_slice_type | u(2) |
| asps_vdmc_ext_displacement_component_height | u(16) |
| asps_vdmc_ext_packing_method | u(1) |
| asps_vdmc_ext_1d_displacement_flag | u(1) |
| } | |

# FIG. 7

| atlas_frame_parameter_set_rbsp( ) { | Descriptor |
|---|---|
| afps_atlas_frame_parameter_set_id | ue(v) |
| ... | |
| afps_extension_present_flag | u(1) |
| if( afps_extension_present_flag ) { | |
| afps_miv_extension_present_flag | u(1) |
| afps_vpcc_extension_present_flag | u(1) |
| afps_vdmc_extension_present_flag | u(1) |
| afps_extension_5bits | u(5) |
| } | |
| ... | |
| if( afps_vdmc_extension_present_flag ) | |
| afps_vdmc_extension( ) | |
| ... | |
| } | |

| afps_vdmc_extension( ) { | Descriptor |
|---|---|
| afps_vdmc_ext_overriden_flag | u(1) |
| if ( afps_vdmc_ext_overriden_flag ) | |
| afps_vdmc_ext_displacement_coordinate_system | u(3) |
| afps_vdmc_ext_displacement_slice_alignment_update_flag | u(1) |
| if ( afps_vdmc_ext_displacement_slice_alignment_update_flag ) { | |
| afps_vdmc_ext_displacement_slice_type | u(2) |
| afps_vdmc_ext_displacement_component_height | u(16) |
| } | |
| afps_vdmc_ext_packing_method | u(1) |
| afps_vdmc_ext_1d_displacement_flag | u(1) |
| } | |

# FIG. 8

gFrame[0]                    width

| [0][0]          · · ·          [0][W-1] |
| · SEGMENT 0 · (QDisp[compIdx][pos] of compIdx=0) · |
| [H-1][0]        · · ·          [H-1][W-1] |
| [H][0]          · · ·          [H][W-1] |
| · SEGMENT 1 · (QDisp[compIdx][pos] of compIdx=0) · |
| [2H-1][0]       · · ·          [2H-1][W-1] |
| [2H][0]         · · ·          [2H][W-1] |
| · SEGMENT 2 · (QDisp[compIdx][pos] of compIdx=0) · |
| [3H-1][0]       · · ·          [3H-1][W-1] |

height

dispHeight

dispHeight

dispHeight

SECOND IMAGE COMPONENT
OF MESH DISPLACEMENT IMAGE
(gFrame[1])

THIRD IMAGE COMPONENT OF
MESH DISPLACEMENT IMAGE
(gFrame[2])

FIRST IMAGE COMPONENT OF MESH DISPLACEMENT IMAGE (gFrame[0])

# FIG. 9

gFrame[0]        width

compIdx=0
    LOD=0

LOD=1

LOD=2

dispHeight

compIdx=1
    LOD=0

LOD=1

LOD=2

height

dispHeight

compIdx=2
    LOD=0

LOD=1

LOD=2

dispHeight

SECOND IMAGE COMPONENT
OF MESH DISPLACEMENT IMAGE
(gFrame[1])

THIRD IMAGE COMPONENT OF
MESH DISPLACEMENT IMAGE
(gFrame[2])

FIRST IMAGE COMPONENT OF MESH DISPLACEMENT IMAGE (gFrame[0])

# FIG. 10

v1

v2          v3

(a) BASE MESH

v1

v12         v13

v2     v23     v3

(b) SUBDIVIDED MESH

v1

v12'        v13'
d12         d13

d23

v2     v23'     v3

(c) DEFORMED MESH

○ : VERTEX

↗ : MESH DISPLACEMENT

# FIG. 11

FIG. 12

FIG. 13

FIG. 14

FIG. 15

(a) MESH

(b) BASE MESH

(c) SUBDIVIDED MESH

(d) MESH DISPLACEMENT

○ : VERTEX

↗ : MESH DISPLACEMENT

# FIG. 16

| asps_vdmc_extension( ) { | Descriptor |
|---|---|
|   asps_vdmc_ext_subdivision_iteration_count | u(8) |
|   asps_vdmc_ext_displacement_coordinate_system | u(3) |
|   asps_vdmc_ext_displacement_slice_type | u(2) |
|   if (asps_vdmc_ext_displacement_slice_type == 1 \|\| asps_vdmc_ext_displacement_slice_type == 2) { | |
|     asps_vdmc_ext_displacement_component_height | u(16) |
|   } else if (asps_vdmc_ext_displacement_slice_type == 3) { | |
|     for (i=0; i<asps_vmc_ext_subdivision_iteration_count+1; i++) { | |
|       asps_vdmc_ext_displacement_component_height_lod[i] | u(16) |
|     } | |
|   } | |
|   asps_vdmc_ext_packing_method | u(1) |
|   asps_vdmc_ext_1d_displacement_flag | u(1) |
| } | |

# FIG. 17

| afps_vdmc_extension( ) { | Descriptor |
|---|---|
| afps_vdmc_ext_subdivision_iteration_count | u(8) |
| afps_vdmc_ext_overriden_flag | u(1) |
| if ( afps_vdmc_ext_overriden_flag ) | |
| afps_vdmc_ext_displacement_coordinate_system | u(3) |
| afps_vdmc_ext_displacement_slice_alignment_update_flag | u(1) |
| if ( afps_vdmc_ext_displacement_slice_alignment_update_flag ) { | |
| afps_vdmc_ext_displacement_slice_type | u(2) |
| if (afps_vdmc_ext_displacement_slice_type == 1 \|\| afps_vdmc_ext_di splacement_slice_type == 2) { | |
| afps_vdmc_ext_displacement_component_height | u(16) |
| } else if (afps_vdmc_ext_displacement_slice_type == 3) { | |
| for (i=0; i<afps_vmc_ext_subdivision_iteration_count+1; i++) { | |
| afps_vdmc_ext_displacement_component_height_lod[i] | u(16) |
| } | |
| } | |
| } | |
| afps_vdmc_ext_packing_method | u(1) |
| afps_vdmc_ext_1d_displacement_flag | u(1) |
| } | |

# FIG. 18

| asps_vdmc_extension( ) { | Descriptor |
|---|---|
| asps_vdmc_ext_subdivision_method | u(3) |
| if (asps_vdmc_ext_subdivision_method) | |
| asps_vdmc_ext_subdivision_iteration_count | u(8) |
| asps_vdmc_ext_displacement_coordinate_system | u(3) |
| asps_vdmc_ext_packing_method | u(1) |
| asps_vdmc_ext_1d_displacement_flag | u(1) |
| asps_vdmc_ext_displacement_video_block_size_idc | u(3) |
| asps_vdmc_ext_displacement_video_segment_enabled_flag | u(1) |
| } | |

# FIG. 19

| asps_vdmc_extension( ) { | Descriptor |
|---|---|
| asps_vdmc_ext_subdivision_method | u(3) |
| if (asps_vdmc_ext_subdivision_method) { | |
| asps_vdmc_ext_subdivision_iteration_count | u(8) |
| } | |
| asps_vdmc_ext_displacement_coordinate_system | u(3) |
| asps_vdmc_ext_packing_method | u(1) |
| asps_vdmc_ext_displacement_video_block_size_idc | u(3) |
| asps_vdmc_ext_1d_displacement_flag | u(1) |
| if (!asps_vdmc_ext_1d_displacement_flag) { | |
| asps_vdmc_ext_displacement_video_segment_enabled_flag | u(1) |
| asps_vdmc_ext_displacement_slice_type | u(2) |
| } | |
| } | |

# FIG. 20

| asps_vdmc_extension( ) { | Descriptor |
|---|---|
| asps_vdmc_ext_subdivision_method | u(3) |
| if (asps_vdmc_ext_subdivision_method) { | |
| asps_vdmc_ext_subdivision_iteration_count | u(8) |
| } | |
| asps_vdmc_ext_displacement_coordinate_system | u(3) |
| asps_vdmc_ext_packing_method | u(1) |
| asps_vdmc_ext_1d_displacement_flag | u(1) |
| if (!asps_vdmc_ext_1d_displacement_flag \|\|<br>  asps_vdmc_ext_subdivision_iteration_count) { | |
| asps_vdmc_ext_displacement_video_segment_enabled_flag | u(1) |
| asps_vdmc_ext_displacement_slice_type | u(2) |
| } | |
| } | |

# FIG. 21

| asps_vdmc_extension( ) { | Descriptor |
|---|---|
| asps_vdmc_ext_subdivision_method | u(3) |
| if (asps_vdmc_ext_subdivision_method) { | |
| asps_vdmc_ext_subdivision_iteration_count | u(8) |
| asps_vdmc_ext_displacement_coordinate_system | u(3) |
| asps_vdmc_ext_1d_displacement_flag | u(1) |
| asps_vdmc_ext_displacement_video_block_size_idc | u(3) |
| asps_vdmc_ext_packing_method | u(1) |
| if (!asps_vdmc_ext_1d_displacement_flag) | |
| asps_vdmc_ext_displacement_video_segment_enabled_flag | u(1) |
| } | |
| } | |

# FIG. 22

| asps_vdmc_extension( ) { | Descriptor |
|---|---|
|   asps_vdmc_ext_subdivision_method | u(3) |
|  if (asps_vdmc_ext_subdivision_method) { | |
|   asps_vdmc_ext_subdivision_iteration_count | u(8) |
|   asps_vdmc_ext_displacement_coordinate_system | u(3) |
|   asps_vdmc_ext_1d_displacement_flag | u(1) |
|   asps_vdmc_ext_displacement_video_flag | u(1) |
|   if (asps_vdmc_ext_displacement_video_flag) { | |
|    asps_vdmc_ext_displacement_video_block_size_idc | u(3) |
|    asps_vdmc_ext_packing_method | u(1) |
|    if (!asps_vdmc_ext_1d_displacement_flag) | |
|     asps_vdmc_ext_displacement_video_segment_enabled_flag | u(1) |
|   } | |
|  } | |
| } | |

# FIG. 23

**EUROPEAN SEARCH REPORT**

Europäisches Patentamt
European Patent Office
Office européen des brevets

Application Number

EP 24 15 7714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "WD 3.0 of V-DMC", 142. MPEG MEETING; 20230424 – 20230428; ANTALYA; (MOTION PICTURE EXPERT GROUP OR ISO/IEC JTC1/SC29/WG11), , no. n22775 23 May 2023 (2023-05-23), XP030310885, Retrieved from the Internet: URL:https://dms.mpeg.expert/doc_end_user/documents/142_Antalya/wg11/MDS22775_WG07_N00611.zip MDS22775_WG07_N00611/MDS22775_WG07_N00611_d9.docx [retrieved on 2023-05-23] * page 36 – page 36 * * page 46 – page 46 * ----- | 1-9 | INV. H04N19/54 H04N19/597 H04N19/70 |

TECHNICAL FIELDS SEARCHED (IPC)

H04N

The present search report has been drawn up for all claims

| Place of search | Date of completion of the search | Examiner |
|---|---|---|
| Munich | 23 April 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *WD 3.0 of V-DMC (MDS22775_WG07_N00611_d9), ISO/IEC JTC 1/SC 29/WG 7 N0611*, April 2023